# EUROPEAN PATENT SPECIFICATION

(11) **EP 4 197 164 B1**
(45) Date of publication and mention of the grant of the patent: **23.09.2026**
(21) Application number: 21752439.6
(22) Date of filing: 20.07.2021
(51) Int. Cl.: H04L 9/40, H04W 72/12

(54) **STAGGERING TRANSMISSION TO WIRELESS CLIENTS BASED ON WIRELESS NETWORK INFORMATION**
STAFFELN DER ÜBERTRAGUNG AN DRAHTLOSE CLIENTS AUF DER BASIS VON DRAHTLOSNETZWERKINFORMATIONEN
TRANSMISSION EN DÉCALAGE À DES CLIENTS SANS FIL SUR LA BASE D'INFORMATIONS DE RÉSEAU SANS FIL

(30) Priority: 14.08.2020 IN 202041035136
(43) Date of publication of application: 21.06.2023
(73) Proprietor: QUALCOMM INCORPORATED, San Diego, California 92121-1714 (US)
(72) Inventor: TINNAKORNSRISUPHAP, Peerapol, San Diego, California 92121-1714 (US); LAKSHMIKANTHA, Sandeep Kanakapura, San Diego, California 92121-1714 (US); HANDE, Prashanth Haridas, San Diego, California 92121-1714 (US); AGARWAL, Ravi, San Diego, California 92121-1714 (US); LIN, Yih-Hao, San Diego, California 92121-1714 (US); LI, Chih-Ping, San Diego, California 92121-1714 (US)
(74) Representative: Reddie & Grose LLP
(86) International application number: PCT/US2021/042379
(87) International publication number: WO 2022/035564

(56) References cited:
- EP-A1- 2 866 406
- CN-A- 103 391 581
- US-A1- 2017 187 827
- US-A1- 2021 185 686
- "3rd Generation Partnership Project; Technical Specification Group Services and System Aspects; Multimedia Broadcast/Multicast Service (MBMS); Protocols and codecs (Release 16)", vol. SA WG4, no. V16.3.0, 19 December 2019 (2019-12-19), pages 1 - 258, XP051840788, Retrieved from the Internet <URL:ftp://ftp.3gpp.org/Specs/archive/26_series/26.346/26346-g30.zip 26346-g30.doc> [retrieved on 20191219]
- "3rd Generation Partnership Project; Technical Specification Group Services and System Aspects; Extended Reality (XR) in 5G (Release 16)", vol. SA WG4, no. V16.0.0, 24 March 2020 (2020-03-24), pages 1 - 131, XP051861436, Retrieved from the Internet <URL:ftp://ftp.3gpp.org/Specs/archive/26_series/26.928/26928-g00.zip 26928-g00.docx> [retrieved on 20200324]

## Description

### BACKGROUND

### Field of the Disclosure

Aspects of the present disclosure relate to wireless communications, and more particularly, to techniques for staggering clients for cloud-based services based on network information.

### Description of Related Art

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies. EP 2 866 406 A1 discloses a policy control method and a device. The method includes: receiving a quality of experience QoE report sent by a user equipment UE, where the QoE report includes a QoE metric and a cell identity of a serving cell of the UE; and performing cell policy control according to the QoE report. A QoE server receives a QoE report sent by a UE, where the QoE report not only includes a QoE metric, but also includes a cell identity of a serving cell of the UE. Therefore, the QoE server performs policy control within a cell range according to the QoE report. "3rd Generation Partnership Project; Technical Specification Group Services and System Aspects; Multimedia Broadcast/Multicast Service (MBMS); Protocols and codecs (Release 16)", 3GPP STANDARD; TECHNICAL SPECIFICATION; 3GPP TS 26.346, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. SA WG4, no. V16.3.0 19 December 2019 (2019-12-19), pages 1-258, XP051840788 discloses how MBMS is a point-to-multipoint service in which data is transmitted from a single source entity to multiple recipients. It describes how transmitting the same data to multiple recipients allows network resources to be shared. It describes how the MBMS bearer service offers two modes: Broadcast Mode and Multicast Mode. "3rd Generation Partnership Project; Technical Specification Group Services and System Aspects; Extended Reality (XR) in 5G (Release 16)", 3GPP STANDARD; TECHNICAL REPORT; 3GPP TR 26.928, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. SA WG4, no. V16.0.0 24 March 2020 (2020-03-24), pages 1-131, XP051861436 discloses information on extended reality, XR in the context of 5G radio and network services. It discloses baseline technologies for XR type of services and applications which outline the QoE/QoS issues of XR-based services, the delivery of XR in the 5G system and an architectural model of 5G media streaming. Interactive, streaming, download and split computer rendering are identified as new delivery categories. US 2017/187827 A1 discloses a system and a method for performing schedule sharing between user terminals using a schedule sharing application are provided. The system includes a first user terminal configured to generate schedule information according to a schedule generation request input from a user of the first user terminal and to transmit and upload the generated schedule information using the schedule sharing application, a server configured to share the uploaded schedule information with one or more user terminals using the schedule sharing application, and a second user terminal configured to receive the shared schedule information using the schedule sharing application and to add the received schedule information to a schedule of a user of the second user terminal.

### SUMMARY

The present invention is defined by the subject-matter of the independent claims. Further details are defined in the dependent claims.

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include desirable latency at a client or desirable traffic capacity at serving cell and/or wireless network. The invention is define in the appended claims to which reference should now be made. Preferable features are defined in dependent claims.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.
**FIG. 1** is a block diagram conceptually illustrating an example wireless communication network, in accordance with certain aspects of the present disclosure.
**FIG. 2** is a block diagram conceptually illustrating a design of an example a base station (BS) and user equipment (UE), in accordance with certain aspects of the present disclosure.
**FIG. 3** is an example frame format for certain wireless communication systems (e.g., new radio (NR)), in accordance with certain aspects of the present disclosure.
**FIG. 4** is a diagram illustrating an example environment in which a UE may communicate with a server through a cloud-based service or session, in accordance with certain aspects of the present disclosure.
**FIG. 5** is a flow diagram illustrating example operations for communicating, from a client to a server, information associated with a wireless communication network, in accordance with certain aspects of the present disclosure.
**FIG. 6** is a flow diagram illustrating example operations for transmitting client data by a server, in accordance with certain aspects of the present disclosure.
**FIG. 7** is a signaling flow diagram illustrating example operations for staggering client data based on network information, in accordance with certain aspects of the present disclosure.
**FIG. 8** is a diagram illustrating an example cluster of servers in communication with UEs via BSs, in accordance with certain aspects of the present disclosure.
**FIG. 9A** is a diagram illustrating an example architecture of a communications network in which a client application provides network information to a server, in accordance with certain aspects of the present disclosure.
**FIG. 9B** illustrates timing diagrams showing a server staggering transmission of client data across multiple cells, in accordance with certain aspects of the present disclosure.
**FIG. 10** is a timing diagram illustrating the delivery of client data from a server to a client, in accordance with certain aspects of the present disclosure.
**FIG. 11** illustrates timing diagrams showing an example of distributing clients over time, in accordance with certain aspects of the present disclosure.
**FIG. 12** illustrates a communications device (e.g., a UE) that may include various components configured to perform operations for the techniques disclosed herein in accordance with aspects of the present disclosure.
**FIG. 13** illustrates a communications device (e.g., a server) that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for staggering or distributing client sessions served by a server.

Under certain low-latency cloud-based services (such as split extended reality (XR) or live video streaming), the timelines of when packets for each of the clients are generated at a server and delivered may affect the traffic capacity of certain wireless communication networks (e.g., a 5G NR network and/or LTE network). For example, the server may send content to clients, which are camped on/served by the same cell, in overlapping periods. In certain cases, the content sent to the clients in the overlapping periods may exceed the traffic capacity at the cell that is serving the clients for the period. In such cases, the clients may experience lag or lower downlink data rates in content delivery from the server due to the traffic capacity of the cell. In certain cases, the lag and/or lower downlink data rates may translate to lower frame rates and/or lower resolutions for certain content, such as video frames. In certain cases, the overlapping content delivery may limit the number of users that a serving cell can serve for a given period.

Client traffic, for multiple clients, that shares network capacity, for example, at the same serving cell, may be spread out over time to enable a desirable number of users that can be served by a wireless communication network or provide desirable latency and/or downlink throughput for client data delivery at the clients. In certain aspects, the clients may send network information, such as cell identifiers of the serving cell, to the server, and the server may spread out transmission and/or generation of the client data based on the network information received from the clients. The network information may enable the server to map a client session to a specific network entity, such as a serving cell of the client, and the server may use the mapping between the client session and a specific network entity to determine a time at which content is delivered to the client. In a cluster of servers that provide content to clients, the servers may coordinate and adjust the transmission and/or generation of client data based on the network information associated with the clients. The various client data delivery schemes described herein may enable desirable latency at the clients, desirable downlink throughputs at the clients, and/or desirable user capacity for a wireless communication network, for example, at a specific serving cell.

The following description provides examples of staggering clients in communication systems, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs.

The techniques described herein may be used for various wireless networks and radio technologies. While aspects may be described herein using terminology commonly associated with 3G, 4G, and/or new radio (e.g., 5G NR) wireless technologies, aspects of the present disclosure can be applied in other generation-based communication systems.

NR access may support various wireless communication services, such as enhanced mobile broadband (eMBB) targeting wide bandwidth (e.g., 80 MHz or beyond), millimeter wave (mmW) targeting high carrier frequency (e.g., e.g., 24 GHz to 53 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe. NR supports beamforming and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

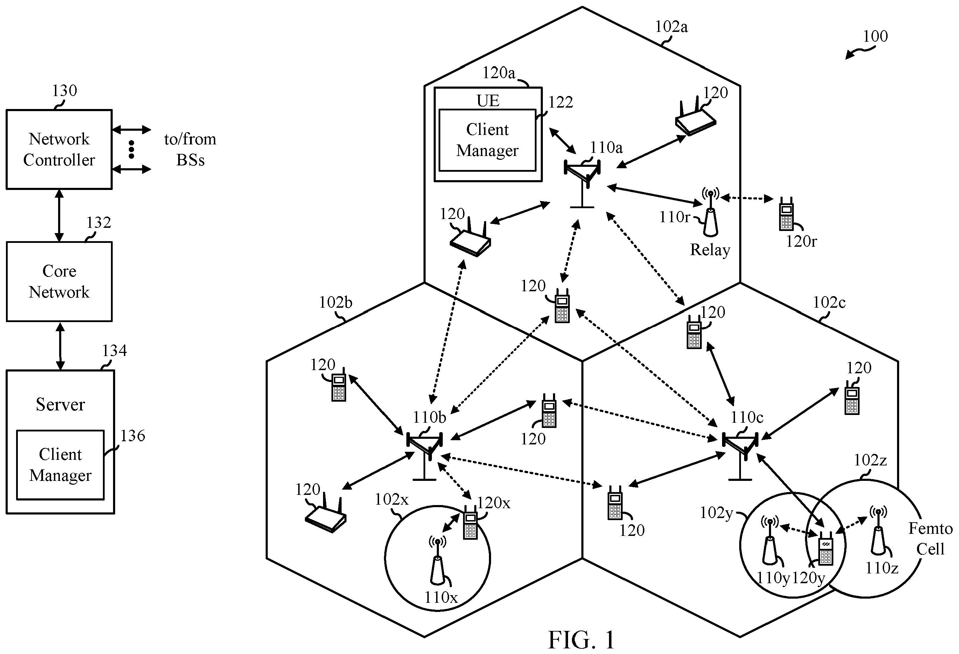

**FIG. 1** illustrates an example wireless communication network 100 in which aspects of the present disclosure may be performed. For example, the wireless communication network 100 may be an NR system (e.g., a 5G NR network) or an Evolved Universal Terrestrial Radio Access (E-UTRA) system (e.g., an LTE network).

The UE 120a includes a client manager 122 that sends network information (e.g., a cell identifier) to the server 134 at an application level and receives client data at a time determined based on the network information, in accordance with aspects of the present disclosure. The server 134 includes a client manager 136 that generates and/or transmits client data at one or more occasions based on the network information, in accordance with aspects of the present disclosure.

As illustrated in **FIG. 1****,** the wireless communication network 100 may include a number of BSs 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another and/or to one or more other BSs or network nodes (not shown) in wireless communication network 100 through various types of backhaul interfaces (e.g., a direct physical connection, a wireless connection, a virtual network, or the like) using any suitable transport network. In the example shown in **FIG. 1****,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells.

The BSs 110 communicate with UEs 120a-y (each also individually referred to herein as UE 120 or collectively as UEs 120) in the wireless communication network 100. The UEs 120 (e.g., 120x, 120y, etc.) may be dispersed throughout the wireless communication network 100, and each UE 120 may be stationary or mobile. Wireless communication network 100 may also include relay stations (e.g., relay station 110r), also referred to as relays or the like, that receive a transmission of data and/or other information from an upstream station (e.g., a BS 110a or a UE 120r) and sends a transmission of the data and/or other information to a downstream station (e.g., a UE 120 or a BS 110), or that relays transmissions between UEs 120, to facilitate communication between devices.

A network controller 130 may be in communication with a set of BSs 110 and provide coordination and control for these BSs 110 (e.g., via a backhaul). In aspects, the network controller 130 may be in communication with a core network 132 (e.g., a 5G Core Network (5GC)), which provides various network functions such as Access and Mobility Management, Session Management, User Plane Function, Policy Control Function, Authentication Server Function, Unified Data Management, Application Function, Network Exposure Function, Network Repository Function, Network Slice Selection Function, etc.

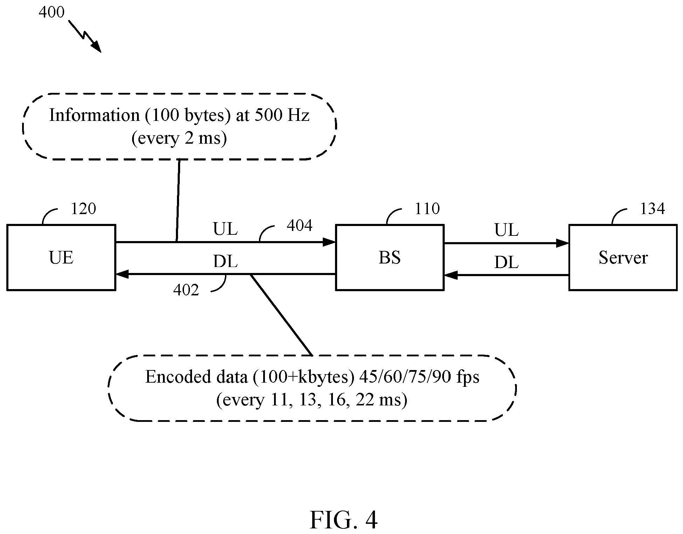

The core network 132 may be in communication with the server 134, such that the core network 132 serves as a packet gateway for providing the UE 120a with access to the server 134. The core network 132 may include various servers and networking devices, such as switches, routers, and gateways. The server 134 may be or include a computer, computing device, or processing system that provides a service (e.g., split extended reality (XR), cloud-gaming, live streaming, etc.) to a client, such as the UE 120a. The server may be or include a program, process, or thread running on the computer, computing device, or processing system. For example, the server 134 may be a virtual instance of a processing system or application, which is hosted on another processing system. That is, the server 134 may be virtualized in an application container or a virtual machine running on the host processing system. A computer-readable medium may include computer-executable instructions that, when executed by one or more processors of the host processing system, cause the host processing system to run the application container or virtual machine, which operates as the server. As further described herein with respect to **FIG. 4****,** split XR may offload the rendering of various content or data (e.g., video and/or audio streams) from the UE 120 to a server (e.g., the server 134) with high-powered processors (e.g., graphics processing units (GPUs)) for virtual reality (VR), augmented reality (AR), or mixed reality (MR) applications. While the server 134 is depicted as a separate server entity in communication with the core network 132 to facilitate understanding, aspects of the present disclosure may be applied to the server 134 being integrated or co-located with the core network 132, network controller 130, and/or BS 110a.

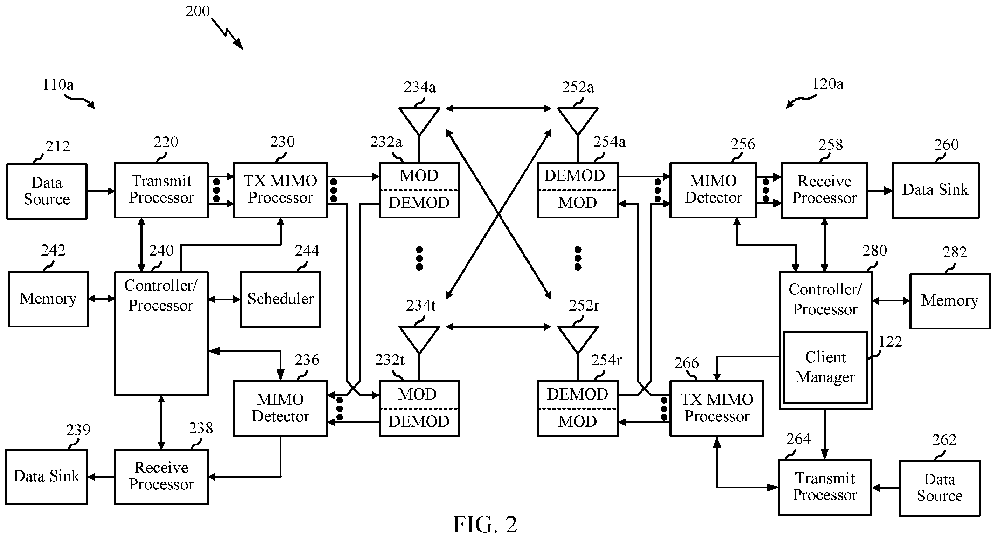

**FIG. 2** illustrates example components of BS 110a and UE 120a (e.g., the wireless communication network 100 of **FIG. 1****),** which may be used to implement aspects of the present disclosure.

At the BS 110a, a transmit processor 220 may receive data from a data source 212 and control information from a controller/processor 240. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. A medium access control (MAC)-control element (MAC-CE) is a MAC layer communication structure that may be used for control command exchange between wireless nodes. The MAC-CE may be carried in a shared channel such as a physical downlink shared channel (PDSCH), a physical uplink shared channel (PUSCH), or a physical sidelink shared channel (PSSCH).

The processor 220 may process (e.g., encode and symbol map) the data and control information to obtain data symbols and control symbols, respectively. The transmit processor 220 may also generate reference symbols, such as for the primary synchronization signal (PSS), secondary synchronization signal (SSS), PBCH demodulation reference signal (DMRS), and channel state information reference signal (CSI-RS). A transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) 232a-232t. Each modulator 232 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 232a-232t may be transmitted via the antennas 234a-234t, respectively.

At the UE 120a, the antennas 252a-252r may receive the downlink signals from the BS 110a and may provide received signals to the demodulators (DEMODs) in transceivers 254a-254r, respectively. Each demodulator 254 may condition (e.g., filter, amplify, downconvert, and digitize) a respective received signal to obtain input samples. Each demodulator may further process the input samples (e.g., for OFDM, etc.) to obtain received symbols. A MIMO detector 256 may obtain received symbols from all the demodulators in transceivers 254a-254r, perform MIMO detection on the received symbols if applicable, and provide detected symbols. A receive processor 258 may process (e.g., demodulate, deinterleave, and decode) the detected symbols, provide decoded data for the UE 120a to a data sink 260, and provide decoded control information to a controller/processor 280.

On the uplink, at UE 120a, a transmit processor 264 may receive and process data (e.g., for the physical uplink shared channel (PUSCH)) from a data source 262 and control information (e.g., for the physical uplink control channel (PUCCH) from the controller/processor 280. The transmit processor 264 may also generate reference symbols for a reference signal (e.g., for the sounding reference signal (SRS)). The symbols from the transmit processor 264 may be precoded by a TX MIMO processor 266 if applicable, further processed by the modulators in transceivers 254a-254r (e.g., for SC-FDM, etc.), and transmitted to the BS 110a. At the BS 110a, the uplink signals from the UE 120a may be received by the antennas 234, processed by the modulators 232, detected by a MIMO detector 236 if applicable, and further processed by a receive processor 238 to obtain decoded data and control information sent by the UE 120a. The receive processor 238 may provide the decoded data to a data sink 239 and the decoded control information to the controller/processor 240.

The memories 242 and 282 may store data and program codes for BS 110a and UE 120a, respectively. A scheduler 244 may schedule UEs for data transmission on the downlink and/or uplink.

Antennas 252, processors 266, 258, 264, and/or controller/processor 280 of the UE 120a and/or antennas 234, processors 220, 230, 238, and/or controller/processor 240 of the BS 110a may be used to perform the various techniques and methods described herein. As shown in **FIG. 2****,** the controller/processor 280 of the UE 120a has a client manager 122 that sends network information (e.g., a cell identifier) to a server (e.g., the server 134) at an application level and receives client data at a time determined based on the network information, according to aspects described herein. Although shown at the controller/processor, other components of the UE 120a and BS 110a may be used to perform the operations described herein.

NR may utilize orthogonal frequency division multiplexing (OFDM) with a cyclic prefix (CP) on the uplink and downlink. NR may support half-duplex operation using time division duplexing (TDD). OFDM and single-carrier frequency division multiplexing (SC-FDM) partition the system bandwidth into multiple orthogonal subcarriers, which are also commonly referred to as tones, bins, etc. Each subcarrier may be modulated with data. Modulation symbols may be sent in the frequency domain with OFDM and in the time domain with SC-FDM. The spacing between adjacent subcarriers may be fixed, and the total number of subcarriers may be dependent on the system bandwidth. The minimum resource allocation, called a resource block (RB), may be 12 consecutive subcarriers. The system bandwidth may also be partitioned into subbands. For example, a subband may cover multiple RBs. NR may support a base subcarrier spacing (SCS) of 15 KHz and other SCS may be defined with respect to the base SCS (e.g., 30 kHz, 60 kHz, 120 kHz, 240 kHz, etc.).

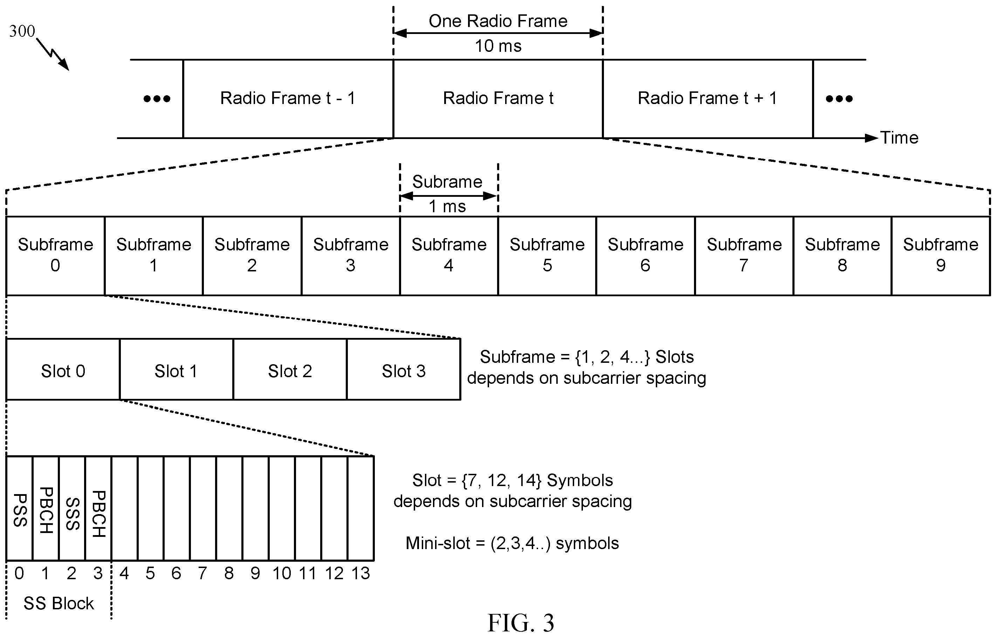

**FIG. 3** is a diagram showing an example of a frame format 300 for certain wireless communication systems such as NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots (e.g., 1, 2, 4, 8, 16, ... slots) depending on the SCS. Each slot may include a variable number of symbol periods (e.g., 7, 12, or 14 symbols) depending on the SCS. The symbol periods in each slot may be assigned indices. A mini-slot, which may be referred to as a sub-slot structure, refers to a transmit time interval having a duration less than a slot (e.g., 2, 3, or 4 symbols). Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal block (SSB) is transmitted. In certain aspects, SSBs may be transmitted in a burst where each SSB in the burst corresponds to a different beam direction for UE-side beam management (e.g., including beam selection and/or beam refinement). The SSB includes a PSS, a SSS, and a two symbol PBCH. The SSB can be transmitted in a fixed slot location, such as the symbols 0-3 as shown in **FIG. 3****.** The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SSBs may be organized into SS bursts to support beam sweeping. Further system information such as, remaining minimum system information (RMSI), system information blocks (SIBs), other system information (OSI) can be transmitted on a physical downlink shared channel (PDSCH) in certain subframes. The SSB can be transmitted up to sixty-four times, for example, with up to sixty-four different beam directions for mmWave. The multiple transmissions of the SSB are referred to as a SS burst set. SSBs in an SS burst set may be transmitted in the same frequency region, while SSBs in different SS bursts sets can be transmitted at different frequency regions.

Certain cloud-based services (such as split XR) may offload the computation or rendering of various content or data (e.g., video and/or audio streams) to servers with high-powered processors (e.g., graphics processing units (GPUs)). In certain cases, a head mount display (HMD) may be equipped with a wireless modem, which provides access to a wireless communication network (e.g., the wireless communication network 100) and enables a split XR session to be wirelessly streamed between the HMD and a server. For example, **FIG. 4** is a diagram illustrating an example environment 400 in which a UE may communicate with a server through a cloud-based service or session. As shown, the UE 120 may receive various generated content 402 (e.g., encoded video stream(s), encoded audio stream(s), and/or instructions for haptic feedback) from the server 134 through a radio access network (RAN), such as the BS 110 and/or network controller 130. For example, the server 134 may send the generated content 402 on a periodic basis (e.g., every 11, 13, 16, or 22 ms) at a high throughput level (e.g., > 100 kilobytes). The UE 120 may send various information 404 to the server 134 through the BS 110. For example, the UE 120 may send the information 404 on a periodic basis (e.g., every 2 ms) at relatively low throughput level (e.g., 100 bytes). The information may be pose information (e.g., the orientation of the user's head relative to a coordinate system) and/or control information (e.g., information from an input device such as a gamepad, controller, or wand). In certain aspects, the server 134 may generate the content 402 based on the information 404. In an XR setting, the UE 120 may display the generated content to the user as a sequence of video frames in an HMD.

A split XR session may have various traffic flow characteristics to provide an acceptable XR experience to the user (i.e., an immersive, realistic, and comfortable experience). For example, a split XR session may have a low-latency (e.g., 5-20 ms delay) between the UE and server, a highly reliable bit error rate (e.g., a packet error rate (PER) of less than or equal to 10⁻³), high downlink throughputs (100-600 Mbit/s or 1-2.5 Gbit/s or higher), and periodic low downlink throughputs (e.g., < 1Mbps). As used herein, split XR may include various low-latency cloud-based services such as cloud gaming, split rendering, split computation, virtual reality (VR), augmented reality (AR), mixed reality (MR), or live video streaming.

### Example of Staggering Clients Based on Wireless Network Information

Under certain low-latency cloud-based services (such as split XR or live video streaming), the timelines of when packets for each of the clients (e.g., the UE 120) are generated at the server (e.g., the server 134) and delivered may affect the traffic capacity of certain wireless communication networks (e.g., 5G NR network or LTE network). For example, the server may send content to clients, which are camped on/served by the same cell (e.g., BS 110a of **FIG. 1****),** in overlapping periods. In certain cases, the content sent to the clients in the overlapping periods may exceed the traffic capacity at the cell that is serving the clients for the period. In such cases, the clients may experience lag or lower downlink data rates in content delivery from the server due to the traffic capacity of the cell. In certain cases, the lag and/or lower downlink data rates may translate to lower frame rates and/or lower resolutions for certain content, such as video frames. In certain cases, the overlapping content delivery may limit the number of users that a serving cell can serve for a given period.

Aspects of the present disclosure provide various apparatus and methods for providing staggered transmission and/or generation of client data based on wireless network information. For example, client traffic, for multiple clients, that shares network capacity, for example, at the same serving cell, may be spread out over time to enable a desirable number of users that can be served by a wireless communication network or provide desirable latency and/or downlink throughput for client data delivery at the clients. In certain aspects, the clients may send network information, such as cell identifiers of the serving cell, to the server, and the server may spread out transmission and/or generation of the client data based on the network information received from the clients. The network information may enable the server to map a client session to a specific network entity, such as a serving cell for the client, and the server may use the mapping between the client session and a specific network entity to determine a time at which content is delivered to the client. In a cluster of servers that provide content to clients, the servers may coordinate and adjust the transmission and/or generation of client data based on the network information associated with the clients. The various client data delivery schemes described herein may enable desirable latency and/or downlink throughputs at the clients and/or desirable user capacity for a wireless communication network, for example, at a specific serving cell.

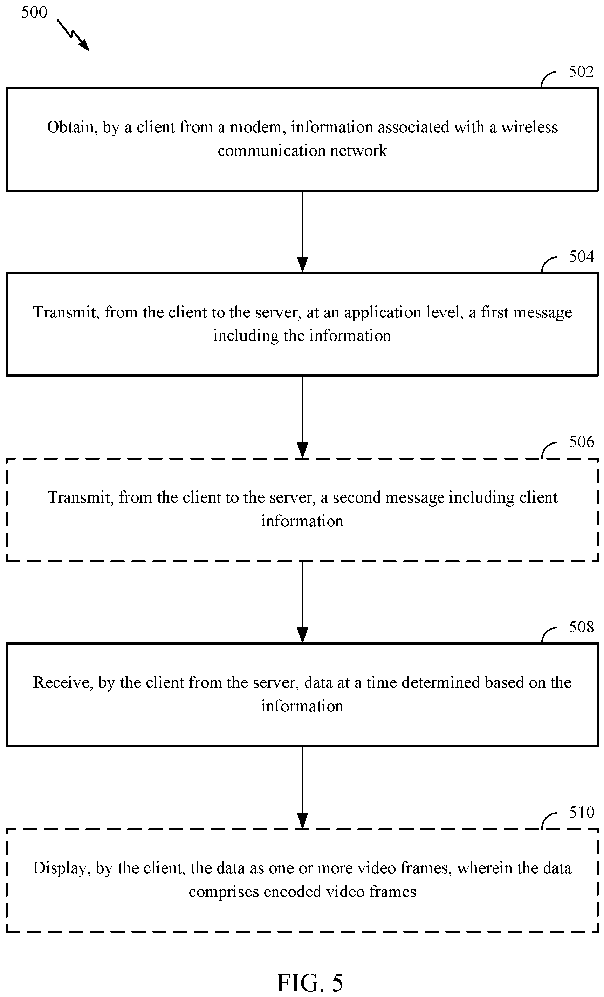

**FIG. 5** is a flow diagram illustrating example operations 500 for communicating, from a client to a server, information associated with a wireless communication network, in accordance with certain aspects of the present disclosure. The operations 500 may be performed, for example, by a user equipment (e.g., the UE 120a in the wireless communication network 100). The operations 500 may be implemented as software components that are executed and run on one or more processors (e.g., controller/processor 280 of **FIG. 2****).** Further, the transmission and reception of signals by the UE in the operations 500 may be enabled, for example, by one or more antennas (e.g., antennas 252 of **FIG. 2****).** In certain aspects, the transmission and/or reception of signals by the UE may be implemented via a bus interface of one or more processors (e.g., controller/processor 280) obtaining and/or outputting signals.

The operations 500 may begin at 502, where a client (e.g., the UE 120) may obtain, from a modem (e.g., a cellular modem such as the modulators/demodulators in the transceivers 254a-254r), information associated with a wireless communication network. At 504, the client may transmit, to the server, at an application level, a first message including the information. Optionally, at 506, the client may transmit, to the server, a second message including client information (e.g., headset orientation information, prediction coefficients, controller input, etc.). At 508, the client may receive, from the server, data at a time determined based on the information. Optionally, the client may display the data as one or more video frames, for example, using a VR headset or other display device.

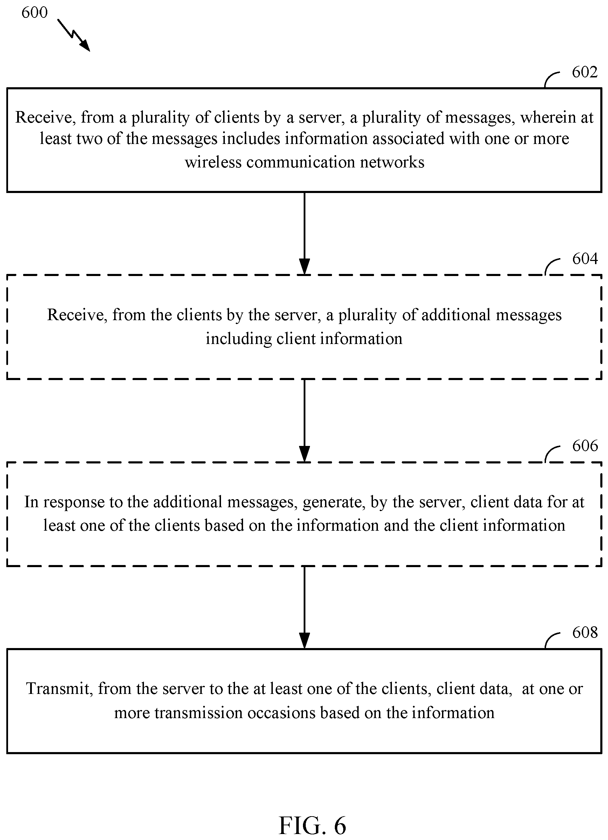

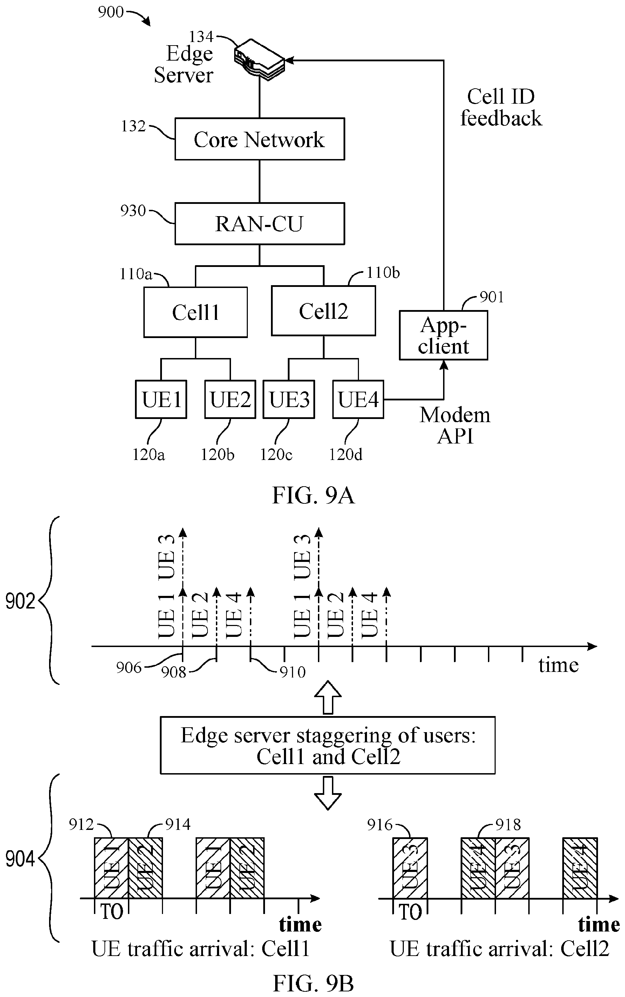

In aspects, the information sent to the server at 504 may enable the server to stagger or adjust the times at which the data is transmitted or generated for multiple clients, as further described herein with respect to **FIG. 6****.** That is, the time at which the data is received at 508 may be adjusted by the server based on the information provided by the client. For example, the server may stagger the data sent to clients camped at the same serving cell based on the information, as further described herein, for example, with respect to **FIG. 9B****.** As an example of staggering data, the server may distribute or adjust rendering timelines of specific clients (e.g., clients served at the same serving cell), such that the downlink traffic for the specific clients do not overlap with each other. In certain cases, staggering data may allow for partially overlapping downlink and/or uplink traffic for specific clients, for example, depending on the network or channel capacity of the RAN.

As used herein, an application level (or layer) may refer to a layer of a protocol stack in which the application layer is the topmost layer, and the remaining layers include a Packet Data Convergence Protocol (PDCP) layer, a Radio Link Control (RLC) layer, a Medium Access Control (MAC) layer, and a Physical (PHY) layer, in descending order. For example, the application level may be the level in which the payload for the protocol stack in a user plane is generated. The payload may be processed at various layers (e.g., the PDCP layer, RLC layer, MAC layer, and PHY layer) to enable transmission of the payload over wireless resources (e.g., frequency-time resources). In certain aspects, the application level may include Session Initiation Protocol (SIP) signaling used to establish, maintain, or terminate a real-time session between the client and server.

In certain aspects, obtaining the information at 502 may involve the client accessing the information via the modem. For example, the client may request the information from the modem, and the modem may provide the information to the client. In certain cases, an application programming interface (API) may be used to pass the information (such as cell identifier, beam identifier, etc.) from the modem to the client. In certain cases, an operating system of the UE (such as Android, Linux, Windows, iOS, macOS, etc.) may provide the API to access the modem at the application level via the client. That is, the operating system may serve as an intermediary between the client at the application level and modem at the hardware level. In certain aspects, the information may include various attributes of the client with respect to the wireless network. For example, the information may include at least one of a cell identifier of a serving cell (e.g., the BS 110a) of the client, a beam identifier of the serving cell, quasi-colocation (QCL) information associated with a reference signal of the serving cell, a medium access control (MAC) address of an access point serving the client, or a network identifier of a network serving the client.

The cell identifier may be an enhanced cell identity (ECI) or a global cell identification such as a cell identity used to unambiguously identify a cell within a wireless network (e.g., a public land mobile network (PLMN)). The beam identifier may be an indication of a downlink beam that the client uses to receive the data at 508. For example, the beam identifier may be an SSB identifier associated with an SSB. The QCL information may also be representative of the downlink beam that carries the data from the serving cell to the client. In certain cases, a reference signal (e.g., a channel state information reference signal (CSI-RS) or a DMRS) may have a QCL relationship with another reference signal (e.g., an SSB or CSI-RS). The QCL information may include the reference signals, reference signal resources, or a QCL type included in a QCL configuration, such as a Transmission Configuration Indication (TCI) state. The network identifier may be, for example, a mobile country code (MCC), mobile network code (MNC), PLMN (which includes the MCC and MNC), a base station identifier (such as an eNodeB identifier or a gNodeB identifier), or a combination thereof.

In certain aspects, the wireless communication network may be a wireless wide area network (WWAN) (such as a 5G NR network or a LTE network) or a wireless local area network (WLAN) (such as a WiFi network). In aspects, the base station serving the client may be a wireless access point in a WLAN, and the information obtained at 502 may include the MAC address of the access point or a service set identifier (SSID) of a WLAN.

In certain aspects, the first message may be included in Session Description Protocol (SDP) signaling for various real-time transfer protocols (RTPs), such as session initiation protocol (SIP). That is, the first message may be an SDP message for SIP. In certain cases, the SDP message may include the information using an attribute field (e.g., "a="). As an example, the attribute field may have the following format:

a=X-cell:<MNC> <MCC> <CID>

where X-cell is the name of the attribute field (other suitable names may be used), MNC is the mobile network code, MCC is the mobile country code, and CID is the cell identifier.

In certain cases, the client may report a wait time between when a frame is ready (e.g., received and decoded at the client) and when time the frame is consumed by the display or other display processing such as an asynchronous reprojection or asynchronous timewarp (ATW). In such cases, the server may adjust the transmission and/or generation times for client data across some or all of the clients by changing the order of render. In certain cases, the client may report a downlink time spread of packets (e.g., IP packets) arriving for a video frame. The downlink time spread may refer to the duration of time that it takes for a video frame to arrive at the client across multiple packets. In such cases, the server may adjust the transmission and/or generation times for the client based on such a time offset if possible.

As an example, the operations 500 may include the client transmitting, to the server, a third message including a wait time for processing the data at the client or a downlink time spread of packets arriving at the client and carrying the generated data, wherein the time is further determined based on the third message. In response to the third message, the client may receive, from the server, additional data at another time determined based on the information and the third message.

In certain aspects, the client may send updated information to the server, for example, when the client performs a handover to a target cell. As an example, the client may handover from a serving cell to a target cell, and based on the handing over, the client may transmit, to the server, updated information. In aspects, the updated information may include a cell identifier of the target cell, a beam identifier of the target cell, QCL information of the target cell, or a network identifier of the network serving the client. In certain aspects, the updated information may include a MAC address of an access point to which the client has transitioned.

In certain aspects, the server may be providing various cloud-based services to the client, such as split XR, split rendering, split computation, cloud gaming, live streaming, or the like. That is, the operations 500 may be implemented for a split XR session or cloud-gaming session. For example, the client information transmitted at 506 may include headset orientation information, prediction coefficients for the headset orientation, controller input, or other suitable processing input for generating the data. The data received at 508 may include one or more rendered video frames, where the server performs the rendering based on the client information. In aspects, the data received at 508 may include one or more rendered video frames (e.g., video frames for the right eye and video frames for the left eye), audio streams, and/or instructions for haptic feedback, and the client may display the one or more rendered video frames, play the audio streams, and/or provide the haptic feedback. As examples, the video frames may be displayed on an HMD in a split XR setting or television screen in a cloud gaming setting, the audio stream may be played through headset speakers, and the haptic feedback may vibrate a controller. The server may generate the data received at 508 based on various input provided by the client. That is, the data received at 508 may be generated based on the client information included in the second message at 506.

In certain cases, the data received at 508 may be instructions or data for an Internet-of-Things (IOT) device in which the server provides low-latency split computation based on sensor data measured by the IOT device. That is, the client information at 506 may include various sensor measurements.

In certain aspects, the operations 500 may be implemented for live streams of various content, such as live video streams. For example, the data received at 508 and displayed at 510 may be video frames of a live video stream.

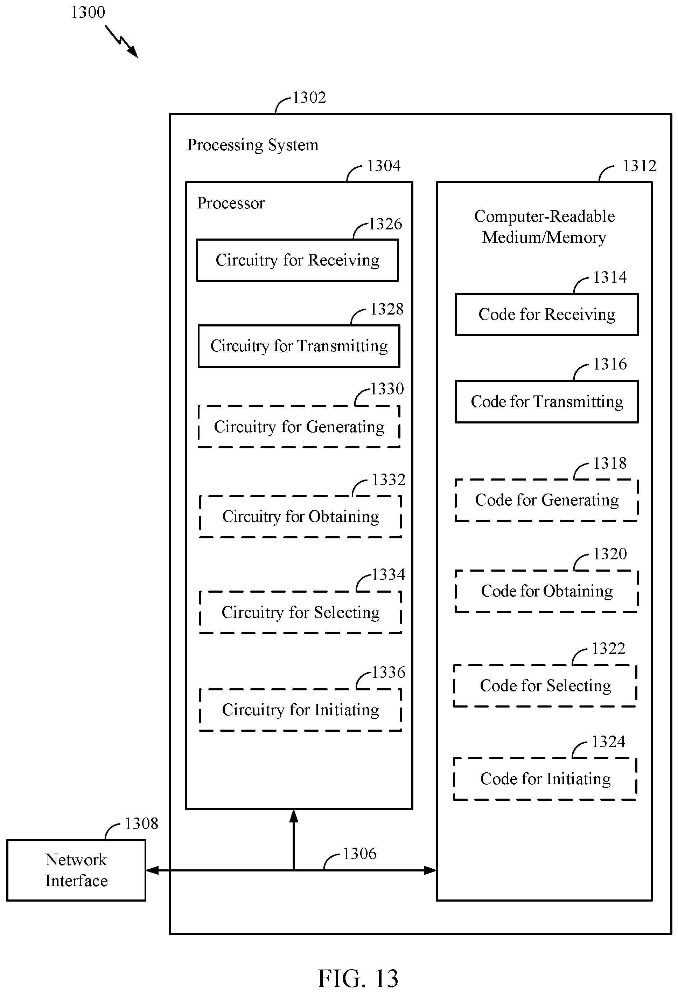

**FIG. 6** is a flow diagram illustrating example operations 600 for transmitting client data, in accordance with certain aspects of the present disclosure. The operations 600 may be performed, for example, by a server (e.g., the server 134 in the wireless communication network 100). The operations 600 may be complimentary to the operations 500 performed by the UE. The operations 600 may be implemented as software components that are executed and run on one or more processors (e.g., the processor 1304 of **FIG. 13****).** Further, the transmission and reception of signals by the server in the operations 600 may be enabled, for example, by a network interface (e.g., the network interface 1308 of **FIG. 13****)** through a wired or optical interface. In certain aspects, the transmission and/or reception of signals by the server may be implemented via a bus interface (e.g., the bus 1306 of **FIG. 13****)** of one or more processors (e.g., the processor 1304) obtaining and/or outputting signals.

The operations 600 may begin at 602, where the server may receive, from a plurality of clients, a plurality of messages. In aspects, at least two of the messages may include information associated with one or more wireless communication networks, and the information may correspond to the information at 502/504 of the operations 500. Optionally, at 604, the server may receive, from the clients by the server, a plurality of additional messages including client information (e.g., headset orientation information, prediction coefficients for the headset orientation, controller input, or other suitable processing input). Optionally, at 606, the server may, in response to the additional messages, generate client data for at least one of the clients based on the information and the client information. At 608, the server may transmit, to the at least one of the clients, client data, at one or more transmission occasions based on the information. In aspects, the information received at 602 may enable the server to stagger or adjust the times at which the data is transmitted and/or generated for multiple clients. In certain cases, information received at 602 may enable the server to spread out or distribute the downlink data of multiple clients over time in order to prevent or reduce overloading the network capacity and/or channel capacity of a specific serving cell or wireless network.

In certain aspects, the server may be a computer, computing device, or processing system that provides a service (e.g., split XR rendering of video frames, audio streams, and/or haptic feedback) to the client. In certain aspects, the server may be a program, process, or thread running on the computer, computing device, or processing system. For example, the server 134 may be a virtual instance of a processing system or application, which is hosted on another processing system. That is, the server 134 may be virtualized in an application container or a virtual machine running on the host processing system.

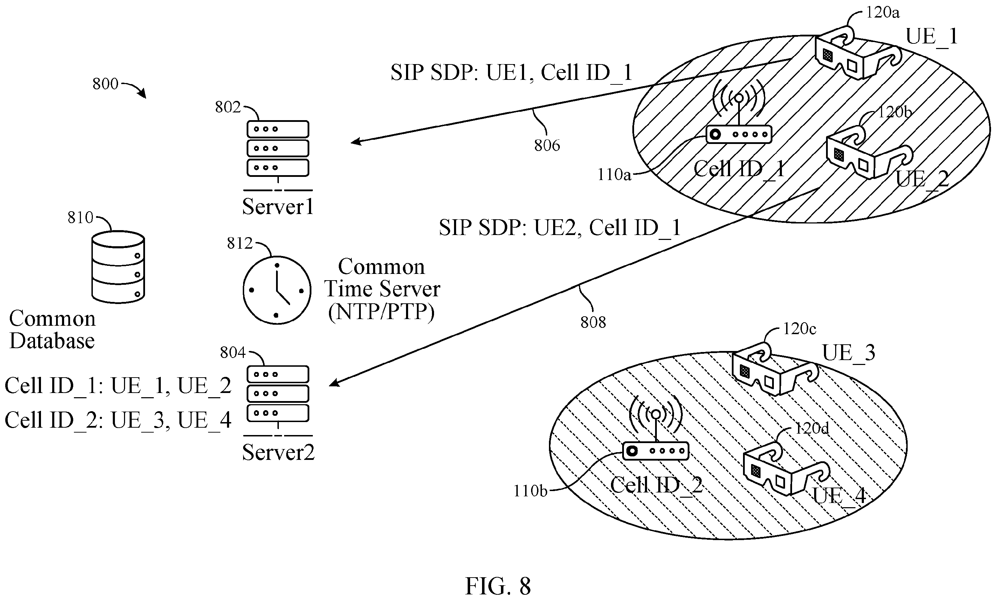

In certain aspects, the same server may provide cloud-based services to certain clients (for example, clients with the same cell identifier). In certain cases, a cluster of servers may provide the cloud-based services to multiple clients, as further described herein with respect to **FIG. 8****.** The same server providing cloud-based services may facilitate the staggering of the generation and/or transmission of client data at desirable latencies, for example, due to an internal clock source at the server. As an example, the operations 600 may further include the server obtaining additional information associated with the one or more wireless communication networks and additional clients. For example, the server may obtain the additional information from a common database (or any suitable data structure) accessible by the servers in the cluster or another server managing the information. The server may select a group of clients among the clients and the additional clients based at least in part on the information and the additional information. In certain cases, instead of the server making the selection, the server may be instructed by another server to provide cloud-based services to the selected group of clients. Transmission of the client data at 608 may include the server transmitting the client data to the group of clients. In aspects, the other server may be integrated within the same computer, computing device, or processing system as the server. For example, the other server may be another virtual machine or application container running on a host machine that is hosting the virtual machine or application container for the server. In certain aspects, the other server may be a separate virtual machine, application container, computer, computing device, or processing system as the server and/or running on a separate virtual machine, computer, computing device, or processing system as the server.

The server may select the group of clients based on various attributes associated with the wireless communication networks. For example, the server may select the clients with the same cell identifier based on the information received at 602 and the additional information. As an example, selecting the group of clients may include selecting the group of clients with at least one of the same cell identifier of a serving cell of the group of clients, the same beam identifier of the serving cell, the same QCL information of the serving cell, the same MAC address of an access point, or the same network identifier of a network (e.g., a wireless communication network such as a PLMN) serving the group of clients.

In certain cases, multiple servers may provide cloud-based services to clients connected to the same network entity (e.g., the same serving cell or wireless network). In such cases, the servers may negotiate to agree on the times at which client data is generated (e.g., rendered at 606) or transmitted at 608. For example, the servers may determine the times at which client data is generated or transmitted based on the times when the sessions were established (e.g., a new session may set the times based on the available gap) or the round-trip latencies among the clients (e.g., the session with a lower latency may be shifted).

As an example, the operations 600 may further include the server obtaining additional information associated with the one or more wireless communication networks and additional clients. The server may select a group of clients among the clients and the additional clients based at least in part on the information and the additional information. For example, the server may identify clients connected to the same serving cell or wireless network (e.g., PLMN). The server may transmit, to another server, a schedule indicating the one or more transmission occasions or one or more processing occasions for the group of clients. The other server may use the schedule to generate or transmit data at the one or more transmission occasions or one or more processing occasions for the clients in the group served by the other server. In aspects, the schedule may be determined based on session establishment times of the group of clients or round-trip latencies of the group of clients. In certain cases, the server and the other server may be time synchronized with each other, for example via a time server, such as a precision time protocol (PTP) server or a network time protocol (NTP) server.

In certain cases, the generation of data at 606 or the transmission of data at 608 may be staggered or shifted based on the information received at 602. For example, the server may initiate generating of the client data at one or more processing occasions, timing of which is based at least in part on the information. Suppose, for example, a first client and a second client are connected to the same serving cell. The server may initiate generating the client data for the first client at a first processing occasion and initiate generating the client data for the second client at a second processing occasion. For example, the second processing occasion may be offset from the first processing occasion by a specific duration (e.g., 5 or 10 ms).

In certain aspects, the transmission of the client data at 608 may include the server initiating transmitting of the client data at the one or more transmission occasions, timing of which is based at least in part on the information. For example, the server may initiate generating the client data for the first client at a first transmission occasion and initiate generating the client data for the second client at a second transmission occasion. The second transmission occasion may be offset from the first transmission occasion by a specific duration (e.g., 5 or 10 ms).

In certain aspects, the information may include various attributes of the clients with respect to the wireless networks. For example, the information may include at least one of one or more cell identifiers of serving cells (e.g., the BS 110a) of the clients, one or more beam identifiers of the serving cells, QCL information associated with one or more reference signals of the serving cells, one or more MAC addresses of access points serving the clients, or one or more network identifiers of networks serving the clients.

In certain aspects, the messages received at 602 may be included in SDP signaling for various RTPs, such as SIP, for example, as described herein with respect to the operations 500. As an example, the messages received at 602 may be SDP messages for SIP.

In certain aspects, the server may receive updated information from a client, for example, when the client performs a handover to a target cell. When the server receives the updated information, the server may adjust the times at which client data is generated or transmitted. For example, the operations 600 may further include the server receiving, from one of the clients, updated information. In aspects, the updated information may include a cell identifier of the target cell, a beam identifier of the target cell, QCL information of the target cell, or a network identifier of the network serving the client. In certain aspects, the updated information may include a MAC address of an access point to which the client has transitioned. The server may initiate transmitting or generating of the client data at one or more processing occasions or one or more transmission occasions, timing of which is based at least in part on the updated information (e.g., the cell identifier). For example, suppose the client moves to a cell where there are no other clients being served by the server. In such a case, the server may concurrently generate or transmit the data for this client with other clients. In certain cases, when the server receives the updated information, the server may request or instruct another server to process the client data for the client. For example, the server may handover processing of the client data to another server in response to receiving the updated information.

In certain cases, the server may receive, from a client, a wait time between when a frame is ready (e.g., received and decoded at the client) and when time the frame is consumed by the display or other display processing such as an asynchronous reprojection or ATW. The server may adjust the transmission and/or generation times for client data across some or all of the clients based on the wait time. That is, the server may adjust the order at which client data is generated or transmitted based on the wait time reported by a client. For example, the wait time may enable the server to shift the client to a later processing occasion or transmission occasion in the order. In certain cases, the server may receive a downlink time spread of packets (e.g., IP packets) arriving for a video frame. In such cases, the server may adjust the transmission and/or generation times for the client based on such a time offset.

As an example, the operations 600 may further include the server receiving, from the clients, a plurality of additional messages including wait times for processing the generated data at the clients or downlink time spreads of packets arriving at the clients and carrying the generated data. The server may initiate generating or transmitting of additional client data at one or more processing occasions or at one or more transmission occasions, timing of which is based at least in part on the wait times or the downlink time spreads.

In certain aspects, the server may be providing various cloud-based services to the client, such as split XR, split rendering, split computation, cloud gaming, live streaming, or the like. That is, the operations 600 may be implemented for a split XR session or cloud-gaming session. For example, the client information received at 604 may include headset orientation information, prediction coefficients for the headset orientation, controller input, or other suitable processing input for generating the data. The data generated at 608 may include one or more rendered video frames, where the server performs the rendering based on the client information. In aspects, the data generated at 606 and transmitted at 608 may include one or more rendered video frames (e.g., video frames for the right eye and video frames for the left eye), audio streams, and/or instructions for haptic feedback, and the client may display the one or more rendered video frames, play the audio streams, and/or provide the haptic feedback. As examples, the video frames may be displayed on an HMD in a split XR setting or television screen in a cloud gaming setting, the audio stream may be played through headset speakers, and the haptic feedback may vibrate a controller. The server may generate the data received at 606 based on various input provided by the client.

In certain aspects, the operations 600 may be implemented for split computation applications. For example, the data generated at 606 and transmitted at 608 may be instructions or data for IOT device in which the server provides low-latency split computation based on sensor data measured by the IOT device. That is, the client information at 604 may include various sensor measurements, and the server may generate at 606 output based on the sensor measurements. The server may stagger or adjust the generation and/or transmission of the data for various clients based on the information received at 602.

In certain aspects, the operations 600 may be implemented for live streaming sessions of various content, such as live video streams. For example, the data transmitted at 608 may be video frames of a live video stream. The server may stagger or adjust the transmission of live streaming content to various clients based on the wireless received at 602.

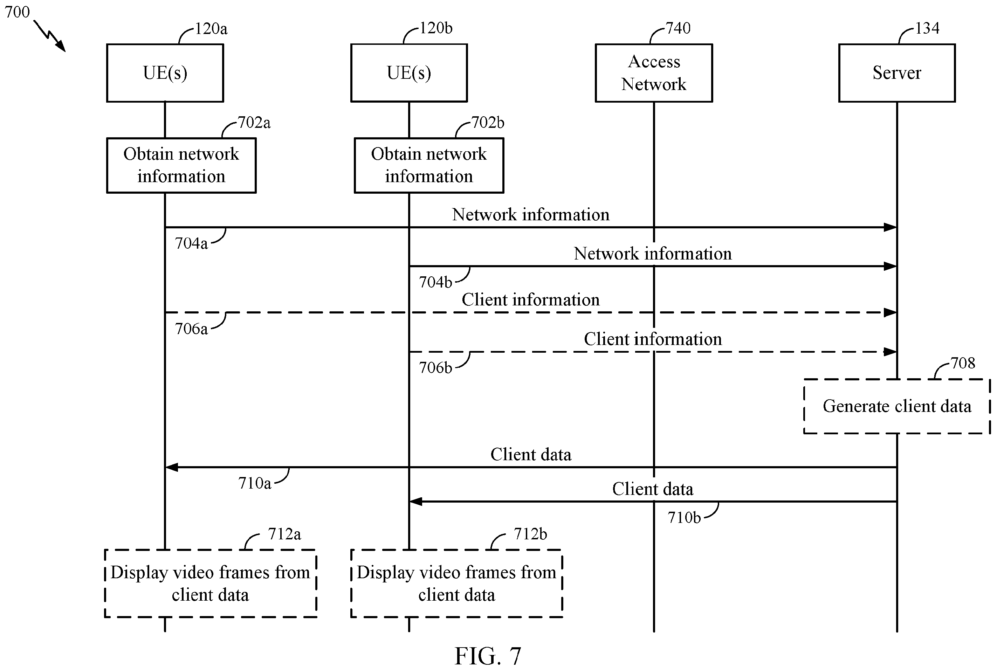

**FIG. 7** is a signaling flow diagram illustrating example operations 700 for staggering clients based on wireless network information, in accordance with certain aspects of the present disclosure. In this example, the UEs 120a, 120b may obtain wireless network information, at 702a and 702b, respectively. As described herein, the wireless network information may be information associated with a wireless communication to which the UE is connected. For example, the wireless network information may include a cell identifier of a serving cell, a beam identifier of the serving cell, QCL information the serving cell, a MAC address of an access point, or a network identifier of a network serving the client. At 704a and 704b, the UEs 120a, 120b may transmit the wireless network information to the server 134 through the access network 740. The UEs 120a, 120b may send the wireless network information when establishing a session with the server 134. In aspects, the access network 740 may include various network entities in a wireless communication network, such as a base station, access point, network controller, or core network. Optionally, at 706a and 706b, the UEs 120a, 120b may transmit client information (such as headset orientation or controller input) to the server 134, for example, in a split XR session or cloud-gaming session. Optionally, at 708, the server 134 may generate client data based on the client information received at 706a or 706b.

In certain cases, the server 134 may stagger or adjust the generation of the client data for each of the UEs 120a, 120b depending on the wireless network information. For example, suppose the UEs 120a, 120b are connected to the same serving cell. The server 134 may identify that the UEs 120a, 120b are connected to the same serving cell based on the cell identifiers included in the wireless network information and mapped to the sessions of the UEs 120a, 120b. Based on the identification, the server 134 may generate the client data for the UE 120a at a first processing occasion and generate the client data for the UE 120b at a second processing occasion, where the first processing occasion is offset from the second processing occasion by a specific duration. In certain cases, for example, where the UEs 120a, 120b are connected to separate cells or separate wireless networks, the server 134 may generate the client data for the UEs 120a, 120b concurrently.

At 710a and 710b, the server 134 may transmit the client data to the UEs 120a, 120b through the access network 740. In certain cases, the server 134 may stagger or adjust the transmission of the client data for each of the UEs 120a, 120b depending on the wireless network information. For example, suppose the UEs 120a, 120b are connected to the same serving cell. The server 134 may transmit, at 710a, the client data for the UE 120a at a first transmission occasion and transmit, at 710b, the client data for the UE 120b at a second transmission occasion, where the first transmission occasion is offset from the second transmission occasion by a specific duration. In certain cases, for example, where the UEs 120a, 120b are connected to separate cells or separate wireless networks, the server 134 may transmit the client data, at 710a and 710b, for the UEs 120a, 120b concurrently.

Optionally, at 712a and 712b, the UEs 120a, 120b may display the client data as video frames. For example, at 712a, the UE 120a may display the video frames with a HMD from the generated client data. In certain cases, at 712b, the UE 120b display the video frames with a display of a smartphone or tablet.

In certain aspects, the server described herein may be part of a cluster of servers that provide various cloud-based services to clients. For example, FIG. 8 is a diagram illustrating an example cluster of servers 800 in communication with UEs 120a-d via base stations 110a, 110b, in accordance with certain aspects of the present disclosure. In this example, the cluster of servers 800 may include a first server 802 and a second server 804. The servers 802, 804 may distribute the network information (e.g., the network information 806, 808) received from the UEs (e.g., the UEs 120a, 120b) along with other attributes of a client session. In some cases, the servers 802, 804 may store the various attributes of a client session (including the network information) in a common data structure such as a common database 810, which is accessible by the servers 802, 804. The common data structure may provide a mapping to various attributes of a client session. As an example, the attributes of a client session may include one or more of a user identifier, a session identifier, a cell identifier (or other wireless network information), and a frame rendering time offset (with respect to a preconfigured reference time). In certain cases, the servers 802, 804 may exchange, with each other, the mapping of the attributes of clients. As an example, the servers 802, 804 may coordinate to route all users with the same cell identifier to the same server, which may alleviate any inaccuracies in synchronizing the staggering of clients among servers. In some cases, a central server in the cluster of servers 800 may manage the mapping of the attributes of clients, and the servers 802, 804 may query the central server for the attributes. In certain cases, the servers 802, 804 may receive instructions (such as a schedule for processing or transmission occasions), from the central server, based on the mapping of the attributes of clients. The servers 802, 804 may use the network information to determine which UEs can be staggered for generation and/or transmission of client data or which UEs can be handled concurrently for generation and/or transmission of client data.

In certain aspects, the cluster of servers 800 may be time synchronized via a time server 812. In aspects, the timer server 812 may be a precision time protocol (PTP) server or a network time protocol (NTP) server. PTP may provide an accuracy in the range of microseconds or nanoseconds (e.g., 100 ns). NTP may provide an accuracy in the range of milliseconds or seconds (e.g., 1 ms). The time server 812 may provide a common clock source for the cluster of servers 800 in scheduling processing occasions and/or transmission occasions of client data to clients.

For example, suppose the first server 802 is serving a session for the first UE 120a, and the second server 804 is serving a session for the second UE 120b. Because the first UE 120a and second UE 120b are connected to the same serving cell, the servers 802, 804 may coordinate to stagger the generation and/or transmission of client data to these UEs. As an example, the first server 802 may generate or transmit the client data for the first UE 120a before the second server 804 generates or transmits the client data for the second UE 120b. Staggering the generation and/or transmission of client data for the UEs 120a, 120b may reduce the traffic load at the base station 110a and enable the base station 110a to server more users. Staggering the generation and/or transmission of client data for the UEs 120a, 120b may provide a desirable latency and/or downlink throughput for the cloud-based service at the UEs 120a, 120b.

**FIG. 9A** is a diagram illustrating an example architecture of a communications network 900 in which a client application 901 provides network information to a server 134, in accordance with certain aspects of the present disclosure. As shown, the UEs 120a, 120b may be connected to the base station 110a, and the UEs 120c, 120d may be connected to the base station 110b. The base stations 110a, 110b may be in communication with a RAN-centralized unit (RAN-CU) 930, such as the network controller 130. The RAN-CU 930 may be in communication with the core network 132, which is in communication with the server 134 (e.g., an edge server). In this example, the client application 901 may obtain network information from the modem of the UE (e.g., the UE 120d) and send the network information to the server 134 through the base station 110b, RAN-CU 930, and the core network 132. The server 134 may use the network information to determine whether to stagger or adjust the generation and/or transmission of client data to the UE 120d.

**FIG. 9B** illustrates timing diagrams showing a server staggering transmission of client data, in accordance with certain aspects of the present disclosure. In this example, a server may be providing services to four UEs, such as the UEs 120a-120d in **FIG. 9A****.** As in **FIG. 9A****,** the UEs 120a, 120b may be connected to the base station 110a (Cell1), and the UEs 120c, 120d may be connected to the base station 110b (Cell2). The server may stagger the transmission of client data to the UEs 120a-120d based on the serving cell serving the UEs. As depicted in the timing diagram 902, the server may transmit the client data for the UEs 120a, 120c at a first transmission occasion 906, transmit the client data for the UE 120b at a second transmission occasion 908, and transmit the client data for the UE 120d at a third transmission occasion 910. The server may repeat this schedule of staggering transmissions.

In aspects, the server may distribute the transmission of client data over the various transmission occasions 906, 908, 910. In this example, the transmission occasions for clients from the same serving cell may be staggered such that the transmission occasions do not overlap with other, such as the first transmission occasion 906 and second transmission occasion 908 not overlapping for the UEs 120a, 120b, respectively. In certain cases, the transmission occasions for clients from the same serving cell may partially overlap with each other depending on the network or channel capacity of the RAN serving the clients. In certain aspects, the server may adjust or shift when client data is generated for specific clients at the server to provide the staggered transmission occasions. For example, the server may initiate the generation of client data for the UE 120a before initiating the generation of client data for the UE 120b to provide the staggered transmission occasions 906, 908. In certain cases, the server may adjust or shift when the client data is sent to specific clients to provide the staggered transmission occasions. For example, in live streaming applications, the server may send a burst of live streaming content to the UE 120a at the first transmission occasion 906 before sending a separate burst of live streaming content to the UE 120b at the second transmission occasion 908.

As depicted in the timing diagrams 904, the client data may arrive at the UEs via the respective base stations in a staggered or distributed fashion. For example, at a first occasion 912 corresponding to the first transmission occasion 906, the UE 120a may receive the client data via the base station 110a, and at a second occasion 914 corresponding to the second transmission occasion 908, the UE 120b may receive the client data via the base station 110a. For the base station 110b, the UE 120c may receive the client data at a third occasion 916 corresponding to the first transmission occasion 906, and the UE 120d may receive the client data at a fourth occasion 918 corresponding to the third transmission occasion 910.

While the examples depicted in **FIG. 9B** are described herein with respect to staggering transmission occasions to facilitate understanding, aspects of the present disclosure may also be applied to staggering or adjusting processing occasions.

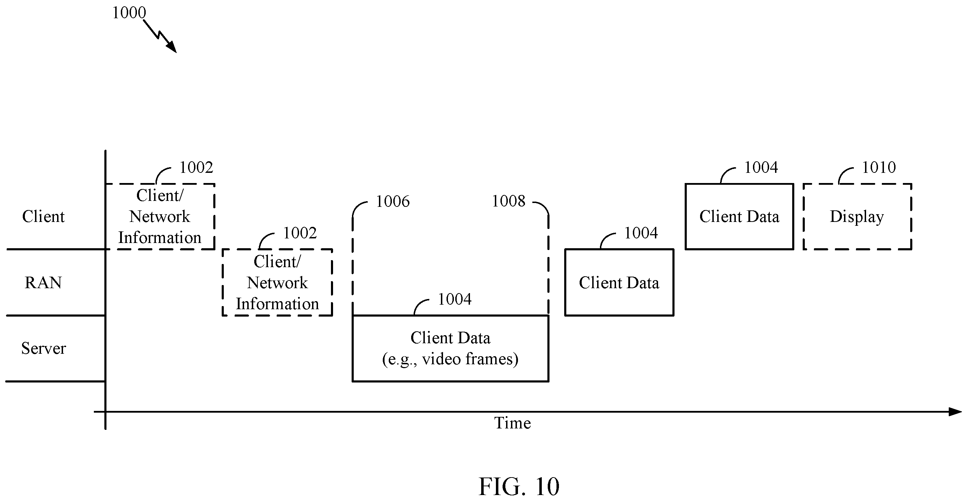

**FIG. 10** is a timing diagram illustrating the delivery of client data from a server to a client, in accordance with certain aspects of the present disclosure. As shown, the client (e.g., the UE 120a) may transmit client/network information 1002 (or network information) to the RAN, the client/network information 1002 may take a certain duration to travel to the RAN, which may take a certain period of time to forward the client/network information 1002 to the server. Optionally, the server may generate client data 1004 (e.g., video frames) based on the client information, such as headset orientation, controller input, or other processing input. In such cases, the server may initiate the generation of client data at a processing occasion 1006. That is, the processing occasion 1006 may be when the server initiates generation of client data, such as video frames. The server may transmit the client data 1004 to the client through the RAN at a transmission occasion 1008. That is, the transmission occasion 1008 may be when the server initiates transmission of client data. In certain aspects, the server may be transmitting a live stream to the client. In such a case, the server may only adjust or stagger the transmission occasion 1008 due to the negligible processing involved in streaming recorded content.

The RAN may forward the client data 1004 to the client, and this process may take a certain duration. The client may receive the client data 1004. In some cases, the client may perform processing on the client data such as decoding video frames or audio streams. In certain cases, the client may display the client data via a display, for example, at the display occasion 1010. The timeline, in this example, demonstrates that the server may shift the processing occasion 1006 or the transmission occasion 1008 to stagger, adjust, or distribute the arrival of client data at the RAN/UEs, for example, as described herein with respect to **FIG. 9B****.**

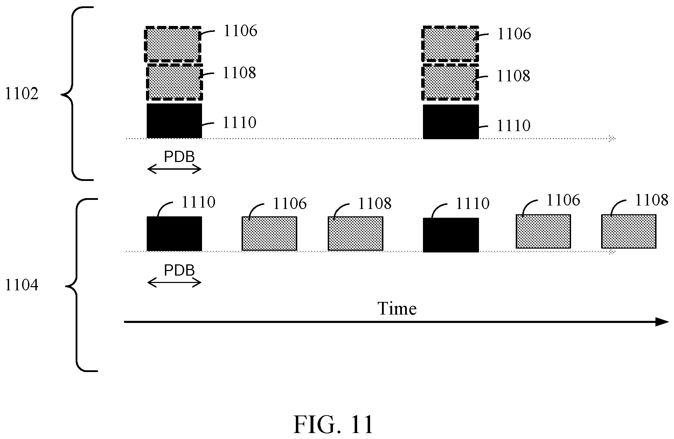

**FIG. 11** are timing diagrams illustrating an example of distributing clients over time, in accordance with certain aspects of the present disclosure. As shown in a first timing diagram 1102, the server may be serving multiple clients 1106, 1108, 1110 concurrently (e.g., transmitting or generating client data within the same time period or in overlapping time periods). As depicted in the timing diagram 1104, the server may distribute the occasions when the client data is generated or transmitted for the clients 1106, 1108, 1110.

While the various examples are described herein with respect to split XR applications to facilitate understanding, aspects of the present disclosure may also be applied to various other cloud-based or edge-based services, such as cloud-gaming, split rendering, split computation, and/or live streaming services.

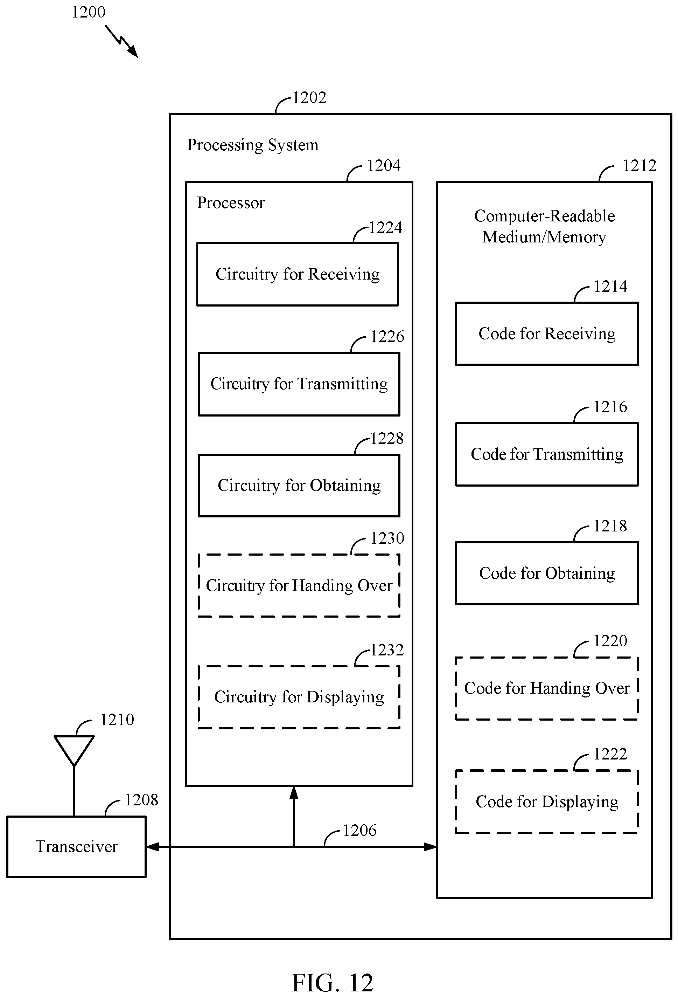

**FIG. 12** illustrates a communications device 1200 (e.g., the UE 120) that may include various components (e.g., corresponding to means-plus-function components) configured to perform operations for the techniques disclosed herein, such as the operations illustrated in **FIG. 5****.** The communications device 1200 includes a processing system 1202 coupled to a transceiver 1208 (e.g., a transmitter and/or a receiver). The transceiver 1208 is configured to transmit and receive signals for the communications device 1200 via an antenna 1210, such as the various signals as described herein. The processing system 1202 may be configured to perform processing functions for the communications device 1200, including processing signals received and/or to be transmitted by the communications device 1200.

The processing system 1202 includes a processor 1204 coupled to a computer-readable medium/memory 1212 via a bus 1206. In certain aspects, the computer-readable medium/memory 1212 is configured to store instructions (e.g., computer-executable code) that when executed by the processor 1204, cause the processor 1204 to perform the operations illustrated in **FIG. 5****,** or other operations for performing the various techniques discussed herein for staggering clients. In certain aspects, computer-readable medium/memory 1212 stores code for receiving 1214, code for transmitting 1216, code for obtaining 1218, code for handing over 1220, and/or code for displaying 1222. In certain aspects, the processor 1204 has circuitry configured to implement the code stored in the computer-readable medium/memory 1212. The processor 1204 includes circuitry for receiving 1224, circuitry for transmitting 1226, circuitry for obtaining 1228, circuitry for handing over 1230, and/or circuitry for displaying 1232.

**FIG. 13** illustrates a communications device 1300 (e.g., the server 134) that may include various components (e.g., corresponding to means-plus-function components) configured to perform operations for the techniques disclosed herein, such as the operations illustrated in **FIG. 6****.** The communications device 1300 includes a processing system 1302 coupled to a network interface 1308. The network interface 1308 is configured to transmit and receive signals for the communications device 1300 via a wired or optical interface, such as the various signals as described herein. As an example, the network interface 1308 may be in communication with one or more base stations, such as the base station 110. The processing system 1302 may be configured to perform processing functions for the communications device 1300, including processing signals received and/or to be transmitted by the communications device 1300. The network interface 1308 may be coupled to the processing system via a bus 1306.

The processing system 1302 includes a processor 1304 coupled to a computer-readable medium/memory 1312 via the bus 1306. In certain aspects, the computer-readable medium/memory 1312 is configured to store instructions (e.g., computer-executable code) that when executed by the processor 1304, cause the processor 1304 to perform the operations illustrated in **FIG. 6****,** or other operations for performing the various techniques discussed herein for staggering clients. In certain aspects, computer-readable medium/memory 1312 stores code for receiving 1314, code for transmitting 1316, code for generating 1318, code for obtaining 1320, code for selecting 1322, and/or code for initiating 1324. In certain aspects, the processor 1304 has circuitry configured to implement the code stored in the computer-readable medium/memory 1312. The processor 1304 includes circuitry for receiving 1326, circuitry for transmitting 1328, circuitry for generating 1330, circuitry for obtaining 1332, circuitry for selecting 1334, and/or circuitry for initiating 1336.

The techniques described herein may be used for various wireless communication technologies, such as NR (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

In 3GPP, the term "cell" can refer to a coverage area of a Node B (NB) and/or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

In some examples, access to the air interface may be scheduled. A scheduling entity (e.g., a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for."

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal (see **FIG. 1****),** a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIGs. 5-7****.**

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A client for communicating, from a client to a server (134), information associated with a wireless communication network , comprising:
a modem;
a memory; and
a processor coupled to the memory and the modem, the processor and the memory being configured to:
obtain, from the modem, information associated with a wireless communication network wherein the information includes a cell identifier of a serving cell of the client;
transmit, to the server (134), at an application level, a first message (704a, 704b) including the information wherein the first message is a session description protocol, SDP, message for session initiation protocol, SIP;
transmit, to the server (134), at an application level, a second message (706a, 706b) comprising client information for generating data (708);
transmit, to the server (134), a third message including a wait time for processing the data (708) at the client or a downlink time spread of packets arriving at the client; and
receive, from the server (134), client data (708) based on the second message, wherein the client data (708) is received at staggered time determined by the server based on the information associated with a wireless communication network and based on the wait time or downlink time spread of packets arriving at the client.

2. The client of claim 1, wherein the information further includes at least one of:
a beam identifier of the serving cell;
quasi-colocation, QCL, information associated with a reference signal of the serving cell;
a medium access control, MAC, address of an access point serving the client; or
a network identifier of a network serving the client.

3. The client of claim 1,
wherein the time [i.e. wait time or downlink time] is further determined based on the second message; and
wherein the processor and the memory are further; configured to receive, from the server in response to the third message, additional data at another time determined based on the information and the second message.

4. The client of claim 1, wherein the processor and the memory are further configured to:
hand over from a serving cell to a target cell, and
transmit, to the server, updated information indicating a cell identifier of the target cell based on the handing over.

5. The client of claim 1, wherein:
client information comprises a client pose information or a client controller information
the client further comprises a display configured to display the data as one or more rendered video frames, wherein the data comprises the one or more rendered video frames, and the data is generated based on the client information included in the second message.

6. A server (134) for transmitting client data, comprising:
a memory; and
a processor coupled to the memory, the processor and the memory being configured to:
receive, from a plurality of clients, a plurality of messages, wherein at least two of the messages includes information associated with one or more wireless communication networks wherein each message is a session description protocol, SDP message for session initiation protocol, SIP, wherein the plurality of messages comprise a first message (704a, 704b) including information including a cell identifier of a serving cell of one of the plurality of clients and wherein the plurality of messages further comprises a second message (706a, 706b) comprising client information for generating client data (708) and a third message including a wait time for processing the client data (708) at each client or a downlink time spread of packets arriving at each client; and
transmit, to at least one of the clients, the client data (708), at one or more transmission occasions based on the information wherein the client data is transmitted at a staggered time determined based on the first message (704a, 704b) including information including a cell identifier of a serving cell of one of the plurality of clients and based on the wait time or downlink time spread of packets arriving at the client.

7. The server of claim 6, wherein the processor and the memory are further configured to:
obtain additional information associated with the one or more wireless communication networks and additional clients,
select a group of clients among the clients and the additional clients based at least in part on the information and the additional information, and
transmit, to the group of clients, the client data wherein the processor and the memory are further configured to select the group of clients with a same beam identifier of a serving cell.

8. The server of claim 6, wherein the processor and the memory are further configured to select the group of clients with at least one of:
a same cell identifier of a serving cell,
a same beam identifier of the serving cell,
a same quasi-colocation, QCL, information associated with a reference signal of the serving cell,
a same medium access control, MAC, address of an access point, or a same network identifier of a network and/or wherein the processor and the memory are configured to obtain the additional information from a database or another server.

9. The server of claim 6, wherein the processor and the memory are further configured to:
obtain additional information associated with the one or more wireless communication networks and additional clients,
select a group of clients among the clients and the additional clients based at least in part on the information and the additional information, and
transmit, to another server, a schedule indicating the one or more transmission occasions for the group of clients, wherein the server and the other server are time synchronized with each other and preferably wherein the schedule is determined based on session establishment times of the group of clients or round-trip latencies of the group of clients.

10. The server of claim 6, wherein the processor and the memory are further configured to: initiate generating of the client data at one or more processing occasions, timing of which is based at least in part on the information and/or wherein the processor and the memory are further configured to initiate transmitting of the client data at the one or more transmission occasions, timing of which is based at least in part on the information and/or wherein the information includes at least one of:
one or more cell identifiers of serving cells of the clients;
one or more beam identifiers of the serving cells;
quasi-colocation, QCL, information associated with one or more reference signals of the serving cells;
one or more medium access control, MAC, addresses of access points serving the clients; or
one or more network identifiers of networks serving the clients.

11. The server of claim 6, wherein the processor and the memory are further configured to:
receive, from one of the clients, updated information indicating a cell identifier of a serving cell, and
initiate generating of the client data at one or more processing occasions, timing of which is based at least in part on the cell identifier and/or wherein the processor and the memory are further configured to:
receive, from the clients, a plurality of additional messages including wait times for processing the data at the clients or downlink time spreads of packets arriving at the clients and carrying the data, and
initiate generating or transmitting of additional client data at one or more processing occasions or at one or more transmission occasions, timing of which is based at least in part on the wait times or the downlink time spreads and/or wherein the processor and the memory are further configured to:
receive, from the clients, a plurality of additional messages including client information, and
render, by the server in response to the additional messages, one or more video frames for at least one of the clients based on the information and the client information, wherein the client data includes the rendered one or more video frames.

12. A method (500) of communicating, from a client to a server, information associated with a wireless communication network, comprising:
obtaining (502), by a client from a modem, information associated with a wireless communication network wherein the information includes a cell identifier of a serving cell of the client;
transmitting (504), from the client to the server, at an application level, a first message (704a, 704b) including the information wherein the first message is a session description protocol, SDP message for session initiation protocol, SIP;
transmit, to the server, at an application level, a second message (706a, 706b) comprising client information for generating data (708);
transmit, to the server (134), a third message including a wait time for processing the data (708) at the client or a downlink time spread of packets arriving at the client; and
receiving, by the client from the server, client data based on the second message, wherein the client data is received at a staggered time determined by the server based on the information associated with a wireless communication network and based on the wait time or downlink time spread of packets arriving at the client.

13. The method of claim 12, wherein the information further includes at least one of:
a beam identifier of the serving cell;
quasi-colocation, QCL, information associated with a reference signal of the serving cell;
a medium access control, MAC, address of an access point serving the client; or a network identifier of a network serving the client and/or, further comprising:
handing over, by the client, from a serving cell to a target cell; and
based on the handing over, transmitting, from the client to the server, updated information indicating a cell identifier of the target cell.

14. A method (600) of transmitting client data, comprising:
receiving (602), from a plurality of clients by a server, a plurality of messages, wherein at least two of the messages includes information associated with one or more wireless communication networks wherein each message is a session description protocol, SDP message for session initiation protocol, SIP , wherein the plurality of messages comprise a first message (704a, 704b) including information including a cell identifier of a serving cell of one of the plurality of clients and wherein the plurality of messages further comprises a second message (706a, 706b) comprising client information for generating client data (708) and a third message including a wait time for processing the client data (708) at each client or a downlink time spread of packets arriving at each client; and
transmitting (608), from the server to at least one of the clients, the client data, at one or more transmission occasions based on the information wherein the client data is transmitted at a staggered time determined based on the first message (704a, 704b) including information including a cell identifier of a serving cell of one of the plurality of clients and based on the wait time or downlink time spread of packets arriving at the client.

15. The method of claim 14, further comprising:
obtaining additional information associated with the one or more wireless communication networks and additional clients;
selecting a group of clients among the clients and the additional clients based at least in part on the information and the additional information;
wherein transmitting the client data comprises transmitting, from the server to the group of clients, the client data.

16. The method of claim 14, further comprising:
obtaining additional information associated with the one or more wireless communication networks and additional clients;
selecting a group of clients among the clients and the additional clients based at least in part on the information and the additional information; and
transmitting, to another server, a schedule indicating the one or more transmission occasions for the group of clients, wherein the server and the other server are time synchronized with each other and/or further comprising initiating generating of the client data at one or more processing occasions, timing of which is based at least in part on the information.

17. The method of claim 14, wherein the information further includes at least one of:
one or more beam identifiers of the serving cells;
quasi-colocation, QCL, information associated with one or more reference signals of the serving cells;
one or more medium access control, MAC, addresses of access points serving the clients; or
one or more network identifiers of networks serving the clients and/or further comprising:
receiving, from one of the clients by the server, updated information indicating a cell identifier of a serving cell; and
initiating generating of the client data at one or more processing occasions, timing of which is based at least in part on the cell identifier.

18. The method of claim 14, further comprising:
receiving, from the clients by the server, a plurality of additional messages including wait times for processing the data at the clients or downlink time spreads of packets arriving at the clients and carrying the data; and
initiating generating or transmitting of additional client data at one or more processing occasions or at one or more transmission occasions, timing of which is based at least in part on the wait times or the downlink time spreads and/or further comprising:
receiving, from the clients by the server, a plurality of additional messages including client information; and
in response to the additional messages, rendering, by the server, one or more video frames for at least one of the clients based on the information and the client information, wherein the client data includes the rendered one or more video frames.

## Patentansprüche

1. Client zur Übermittlung, von einem Client zu einem Server (134), von mit einem drahtlosen Kommunikationsnetzwerk assoziierten Informationen, der Folgendes umfasst:
ein Modem;
einen Speicher; und
einen mit dem Speicher und dem Modem gekoppelten Prozessor, wobei der Prozessor und der Speicher konfiguriert sind zum:
Erhalten, von dem Modem, von mit einem drahtlosen Kommunikationsnetzwerk assoziierten Informationen, wobei die Informationen eine Zellkennung einer bedienenden Zelle des Clients umfassen;
Übertragen, zu dem Server (134), auf einer Anwendungsebene, einer die Informationen enthaltenden ersten Nachricht (704a, 704b), wobei die erste Nachricht eine SDP-(Session Description Protocol)-Nachricht für das SIP (Session Initiation Protocol) ist;
Übertragen, zu dem Server (134), auf einer Anwendungsebene, einer zweiten Nachricht (706a, 706b), die Client-Informationen zur Erzeugung von Daten (708) enthält;
Übertragen, zu dem Server (134), einer dritten Nachricht, die eine Wartezeit für die Verarbeitung der Daten (708) am Client oder eine Downlink-Zeitstreuung von beim Client eintreffenden Paketen enthält; und
Empfangen, von dem Server (134), von Client-Daten (708) auf der Basis der zweiten Nachricht, wobei die Client-Daten (708) zu einer gestaffelten Zeit empfangen werden, die vom Server auf der Basis der mit einem drahtlosen Kommunikationsnetzwerk assoziierten Informationen sowie auf der Basis der Wartezeit oder der Downlink-Zeitstreuung von beim Client eintreffenden Pakete bestimmt wird.

2. Client nach Anspruch 1, wobei die Informationen ferner mindestens eines umfassen von:
einer Strahlkennung der bedienenden Zelle;
QCL-(Quasi-Colocation)-Informationen, die mit einem Referenzsignal der bedienenden Zelle assoziiert sind;
einer MAC-(Medium Access Control)-Adresse eines den Client bedienenden Zugangspunkts; oder
einer Netzwerkkennung eines den Client bedienenden Netzwerks.

3. Client nach Anspruch 1,
wobei die Zeit [d.h. Wartezeit oder Downlink-Zeit] ferner auf der Basis der zweiten Nachricht bestimmt wird; und
wobei der Prozessor und der Speicher ferner zum Empfangen, vom Server als Antwort auf die dritte Nachricht, zusätzlicher Daten zu einer auf der Basis der Informationen und der zweiten Nachricht bestimmten anderen Zeit konfiguriert sind.

4. Client nach Anspruch 1, wobei der Prozessor und der Speicher ferner konfiguriert sind zum:
Übergeben von einer bedienenden Zelle an eine Zielzelle, und
Übertragen, zum Server, aktualisierter Informationen, die eine Zellkennung der Zielzelle auf der Basis der Übergabe angeben.

5. Client nach Anspruch 1, wobei:
Client-Informationen eine Client-Poseninformation oder eine Client-Steuerungsinformation umfassen;
der Client ferner ein Display umfasst, das zum Anzeigen der Daten als einen oder mehrere gerenderte Videoframes konfiguriert ist, wobei die Daten die ein oder mehreren gerenderten Videoframes umfassen und die Daten auf der Basis der in der zweiten Nachricht enthaltenen Client-Informationen erzeugt werden.

6. Server (134) zum Übertragen von Client-Daten, der Folgendes umfasst:
einen Speicher; und
einen mit dem Speicher gekoppelten Prozessor, wobei der Prozessor und der Speicher konfiguriert sind zum:
Empfangen, von mehreren Clients, mehrerer Nachrichten, wobei mindestens zwei der Nachrichten mit einem oder mehreren drahtlosen Kommunikationsnetzen assoziierte Informationen enthalten, wobei jede Nachricht eine SDP-(Session Description Protocol)-Nachricht für das SIP (Session Initiation Protocol) ist, wobei die mehreren Nachrichten eine erste Nachricht (704a, 704b) mit eine Zellkennung einer bedienenden Zelle eines der mehreren Clients enthaltenden Informationen umfassen, und wobei die mehreren Nachrichten ferner eine Client-Informationen zum Erzeugen von Client-Daten (708) enthaltende zweite Nachricht (706a, 706b) sowie eine eine Wartezeit für die Verarbeitung der Client-Daten (708) an jedem Client oder eine Downlink-Zeitstreuung von bei jedem Client eintreffenden Paketen enthaltende dritte Nachricht umfassen; und
Übertragen, zu mindestens einem der Clients, der Client-Daten (708) bei einem oder mehreren Übertragungsereignissen auf der Basis der Informationen, wobei die Client-Daten zu einer gestaffelten Zeit übertragen werden, die auf der Basis der die Informationen einschließlich einer Zellkennung einer bedienenden Zelle eines der mehreren Clients enthaltenden ersten Nachricht (704a, 704b) sowie auf der Basis der Wartezeit oder der Downlink-Zeitstreuung von beim Client eintreffenden Paketen bestimmt wird.

7. Server nach Anspruch 6, wobei der Prozessor und der Speicher ferner konfiguriert sind zum:
Erhalten zusätzlicher Informationen, die mit den ein oder mehreren drahtlosen Kommunikationsnetzen und zusätzlichen Clients assoziiert sind,
Auswählen einer Gruppe von Clients unter den Clients und den zusätzlichen Clients zumindest teilweise auf der Basis der Informationen und der zusätzlichen Informationen, und
Übertragen der Client-Daten zu der Gruppe von Clients, wobei der Prozessor und der Speicher ferner zum Auswählen der Gruppe von Clients mit derselben Strahlkennung einer bedienenden Zelle konfiguriert sind.

8. Server nach Anspruch 6, wobei der Prozessor und der Speicher ferner konfiguriert sind zum Auswählen der Gruppe von Clients anhand von mindestens einem von:
einer selben Zellkennung einer bedienenden Zelle,
einer selben Strahlkennung der bedienenden Zelle,
einer selben QCL-(Quasi-Colocation)-Information, die mit einem Referenzsignal der bedienenden Zelle assoziiert ist,
einer selben MAC-(Medium Access Control)-Adresse eines Zugangspunkts oder einer selben Netzwerkkennung eines Netzwerks, und/oder wobei der Prozessor und der Speicher zum Erhalten der zusätzlichen Informationen aus einer Datenbank oder von einem anderen Server konfiguriert sind.

9. Server nach Anspruch 6, wobei der Prozessor und der Speicher ferner konfiguriert sind zum:
Erhalten zusätzlicher Informationen, die mit den ein oder mehreren drahtlosen Kommunikationsnetzen und zusätzlichen Clients assoziiert sind,
Auswählen einer Gruppe von Clients unter den Clients und den zusätzlichen Clients zumindest teilweise auf der Basis der Informationen und der zusätzlichen Informationen, und
Übertragen, zu einem anderen Server, eines Zeitplans, der die ein oder mehreren Übertragungsereignisse für die Gruppe von Clients angibt, wobei der Server und der andere Server zeitlich miteinander synchronisiert sind, und wobei der Zeitplan vorzugsweise auf der Basis von Sitzungsaufbauzeiten der Gruppe von Clients oder Round-Trip-Latenzen der Gruppe von Clients bestimmt wird.

10. Server nach Anspruch 6, wobei der Prozessor und der Speicher ferner konfiguriert sind zum: Einleiten der Erzeugung der Client-Daten an einem oder mehreren Verarbeitungsereignissen, deren Timing zumindest teilweise auf den Informationen basiert, und/oder wobei der Prozessor und der Speicher ferner zum Einleiten der Übertragung der Client-Daten bei den ein oder mehreren Übertragungsereignissen konfiguriert sind, deren Timing zumindest teilweise auf den Informationen basiert, und/oder wobei die Informationen mindestens eines umfassen von:
einer oder mehreren Zellkennungen von bedienenden Zellen der Clients;
einer oder mehreren Strahlkennungen der bedienenden Zellen;
QCL-(Quasi-Colocation)-Informationen, die mit einem oder mehreren Referenzsignalen der bedienenden Zellen assoziiert sind;
einer oder mehreren MAC-(Medium Access Control)-Adressen von die Clients bedienenden Zugangspunkten; oder
einer oder mehreren Netzwerkkennungen von die Clients bedienenden Netzwerken.

11. Server nach Anspruch 6, wobei der Prozessor und der Speicher ferner konfiguriert sind zum:
Empfangen, von einem der Clients, aktualisierter Informationen, die eine Zellenkennung einer bedienenden Zelle angeben, und
Einleiten der Erzeugung der Client-Daten bei einem oder mehreren Verarbeitungsereignissen, deren Timing zumindest teilweise auf der Zellkennung basiert, und/oder wobei der Prozessor und der Speicher ferner konfiguriert sind zum:
Empfangen, von den Clients, mehrerer zusätzlicher Nachrichten, die Wartezeiten für die Verarbeitung der Daten bei den Clients oder Downlink-Zeitstreuungen von bei den Clients eintreffenden und die Daten transportierenden Paketen enthalten, und
Einleiten der Erzeugung oder Übertragung zusätzlicher Client-Daten bei einem oder mehreren Verarbeitungsereignissen oder bei einem oder mehreren Übertragungsereignissen, deren Timing zumindest teilweise auf den Wartezeiten oder den Downlink-Zeitstreuungen basiert, und/oder wobei der Prozessor und der Speicher ferner konfiguriert sind zum:
Empfangen, von den Clients, mehrerer zusätzlicher Nachrichten, die Client-Informationen enthalten, und
Rendern, durch den Server als Reaktion auf die zusätzlichen Nachrichten, eines oder mehrerer Videoframes für mindestens einen der Clients auf der Basis der Informationen und der Client-Informationen, wobei die Client-Daten die gerenderten ein oder mehreren Videoframes umfassen.

12. Verfahren (500) zum Übermitteln, von einem Client zu einem Server, von mit einem drahtlosen Kommunikationsnetzwerk assoziierten Informationen, das Folgendes beinhaltet:
Erhalten (502), durch einen Client von dem Modem, von mit einem drahtlosen Kommunikationsnetzwerk assoziierten Informationen, wobei die Informationen eine Zellkennung einer bedienenden Zelle des Clients umfassen;
Übertragen (504), von dem Client zu dem Server, auf einer Anwendungsebene, einer die Informationen enthaltenden ersten Nachricht (704a, 704b), wobei die erste Nachricht eine SDP-(Session Description Protocol)-Nachricht für das SIP (Session Initiation Protocol) ist;
Übertragen, zu dem Server, auf einer Anwendungsebene, einer zweiten Nachricht (706a, 706b), die Client-Informationen zur Erzeugung von Daten (708) enthält;
Übertragen, zu dem Server (134), einer dritten Nachricht, die eine Wartezeit für die Verarbeitung der Daten (708) am Client oder eine Downlink-Zeitstreuung von beim Client eintreffenden Paketen enthält; und
Empfangen, durch den Client von dem Server, von Client-Daten auf der Basis der zweiten Nachricht, wobei die Client-Daten zu einer gestaffelten Zeit empfangen werden, die vom Server auf der Basis der mit einem drahtlosen Kommunikationsnetzwerk assoziierten Informationen sowie auf der Basis der Wartezeit oder der Downlink-Zeitstreuung von beim Client eintreffenden Pakete bestimmt wird.

13. Verfahren nach Anspruch 12, wobei die Informationen ferner mindestens eines umfassen von:
einer Strahlkennung der bedienenden Zelle;
QCL-(Quasi-Colocation)-Informationen, die mit einem Referenzsignal der bedienenden Zelle assoziiert sind;
einer MAC-Adresse (Medium Access Control) eines den Client bedienenden Zugangspunkts; oder
einer Netzwerkkennung eines den Client bedienenden Netzwerks, und/oder das ferner Folgendes beinhaltet:
Übergeben, durch den Client, von einer bedienenden Zelle zu einer Zielzelle; und
Übertragen, vom Client zu dem Server, auf der Basis der Übergabe, aktualisierter Informationen, die eine Zellkennung der Zielzelle angeben.

14. Verfahren (600) zum Übertragen von Client-Daten, das Folgendes beinhaltet:
Empfangen (602), von mehreren Clients durch einen Server, mehrerer Nachrichten, wobei mindestens zwei der Nachrichten mit einem oder mehreren drahtlosen Kommunikationsnetzen assoziierte Informationen enthalten, wobei jede Nachricht eine SDP-(Session Description Protocol)-Nachricht für das SIP (Session Initiation Protocol) ist, wobei die mehreren Nachrichten eine erste Nachricht (704a, 704b) mit eine Zellkennung einer bedienenden Zelle eines der mehreren Clients enthaltenden Informationen enthalten, und wobei die mehreren Nachrichten ferner eine Client-Informationen zum Erzeugen von Client-Daten (708) enthaltende zweite Nachricht (706a, 706b) sowie eine eine Wartezeit für die Verarbeitung der Client-Daten (708) an jedem Client oder eine Downlink-Zeitstreuung von bei jedem Client eintreffenden Paketen enthaltende dritte Nachricht enthalten; und
Übertragen (608), von dem Server zu mindestens einem der Clients, der Client-Daten bei einem oder mehreren Übertragungsereignissen auf der Basis der Informationen, wobei die Client-Daten zu einer gestaffelten Zeit übertragen werden, die auf der Basis der die Informationen einschließlich einer Zellkennung einer bedienenden Zelle eines der mehreren Clients enthaltenden ersten Nachricht (704a, 704b) sowie auf der Basis der Wartezeit oder der Downlink-Zeitstreuung von beim Client eintreffenden Paketen bestimmt wird.

15. Verfahren nach Anspruch 14, das ferner Folgendes beinhaltet:
Erhalten zusätzlicher Informationen, die mit den ein oder mehreren drahtlosen Kommunikationsnetzen und zusätzlichen Clients assoziiert sind,
Auswählen einer Gruppe von Clients unter den Clients und den zusätzlichen Clients zumindest teilweise auf der Basis der Informationen und der zusätzlichen Informationen, und
wobei das Übertragen der Client-Daten das Übertragen, von dem Server zu der Gruppe von Clients, der Client-Daten beinhaltet.

16. Verfahren nach Anspruch 14, das ferner Folgendes beinhaltet:
Erhalten zusätzlicher Informationen, die mit den ein oder mehreren drahtlosen Kommunikationsnetzen und zusätzlichen Clients assoziiert sind;
Auswählen einer Gruppe von Clients unter den Clients und den zusätzlichen Clients zumindest teilweise auf der Basis der Informationen und der zusätzlichen Informationen; und
Übertragen, zu einem anderen Server, eines Zeitplans, der die ein oder mehreren Übertragungsereignisse für die Gruppe von Clients angibt, wobei der Server und der andere Server zeitlich miteinander synchronisiert sind und/oder ferner das Einleiten der Erzeugung der Client-Daten zu einem oder mehreren Verarbeitungsereignissen beinhaltet, deren Timing zumindest teilweise auf den Informationen basiert.

17. Verfahren nach Anspruch 14, wobei die Informationen ferner mindestens eines umfassen von:
einer oder mehreren Strahlkennungen der bedienenden Zellen;
QCL-(Quasi-Colocation)-Informationen, die mit einem oder mehreren Referenzsignalen der bedienenden Zellen assoziiert sind;
einer oder mehreren MAC-Adressen (Medium Access Control) von die Clients bedienenden Zugangspunkten; oder
einer oder mehreren Netzwerkkennungen von die Clients bedienenden Netzwerken, und/oder das ferner Folgendes beinhaltet:
Empfangen, von einem der Clients durch den Server, aktualisierter Informationen, die eine Zellkennung einer bedienenden Zelle angeben; und
Einleiten der Erzeugung der Client-Daten bei einem oder mehreren Verarbeitungsereignissen, deren Timing zumindest teilweise auf der Zellkennung basiert.

18. Verfahren nach Anspruch 14, das ferner Folgendes beinhaltet:
Empfangen, von den Clients durch den Server, mehrerer zusätzlicher Nachrichten, die Wartezeiten für die Verarbeitung der Daten bei den Clients oder Downlink-Zeitstreuungen von bei den Clients eintreffenden und die Daten transportierenden Paketen enthalten, und
Einleiten der Erzeugung oder Übertragung zusätzlicher Client-Daten bei einem oder mehreren Verarbeitungsereignissen oder bei einem oder mehreren Übertragungsereignissen, deren Timing zumindest teilweise auf den Wartezeiten oder den Downlink-Zeitstreuungen basiert, und/oder das ferner Folgendes beinhaltet:
Empfangen, von den Clients durch den Server, mehrerer zusätzlicher Nachrichten, die Client-Informationen enthalten, und
Rendern, durch den Server als Reaktion auf die zusätzlichen Nachrichten, eines oder mehrerer Videoframes für mindestens einen der Clients auf der Basis der Informationen und der Client-Informationen, wobei die Client-Daten die gerenderten ein oder mehreren Videoframes umfassen.

## Revendications

1. Client destiné à communiquer, depuis un client vers un serveur (134), des informations associées à un réseau de communication sans fil , comprenant :
un modem ;
une mémoire ; et
un processeur couplé à la mémoire et au modem, le processeur et la mémoire étant configurés pour :
obtenir, à partir du modem, des informations associées à un réseau de communication sans fil, les informations comportant un identifiant de cellule d'une cellule de desserte du client ;
transmettre, au serveur (134), à un niveau application, un premier message (704a, 704b) comportant les informations, le premier message étant un message de protocole de description de session, SDP, d'un protocole de lancement de session, SIP ;
transmettre, au serveur (134), à un niveau application, un deuxième message (706a, 706b) comprenant des informations client pour générer des données (708) ;
transmettre, au serveur (134), un troisième message comportant un temps d'attente pour le traitement des données (708) au niveau du client ou un étalement de temps de liaison descendante de paquets au niveau du client ; et
recevoir, à partir du serveur (134), des données client (708) sur la base du deuxième message, dans lequel les données client (708) sont reçues à un temps échelonné déterminé sur la base des informations associées à un réseau de communication sans fil et sur la base du temps d'attente ou de l'étalement de temps de liaison descendante de paquets arrivant au niveau du client.

2. Client selon la revendication 1, dans lequel les informations comportent en outre au moins des informations parmi :
un identifiant de faisceau de la cellule de desserte ;
des informations de quasi-coemplacement, QCL, associées à un signal de référence de la cellule de desserte ;
une adresse de commande d'accès au support, MAC, d'un point d'accès desservant le client ; ou
un identifiant réseau d'un réseau desservant le client.

3. Client selon la revendication 1,
dans lequel le temps [c'est-à-dire le temps d'attente ou le temps de liaison descendante] est déterminé en outre sur la base du deuxième message ; et
dans lequel le processeur et la mémoire sont configurés en outre pour recevoir, à partir du serveur en réponse au troisième message, des données supplémentaires à un autre temps déterminé sur la base des informations et du deuxième message.

4. Client selon la revendication 1, dans lequel le processeur et la mémoire sont configurés en outre pour :
réaliser un transfert d'une cellule de desserte à une cellule cible, et
transmettre, au serveur, des informations mises à jour indiquant un identifiant de cellule de la cellule cible sur la base du transfert.

5. Client selon la revendication 1, dans lequel :
les informations client comprennent des informations de pose de client ou des informations de contrôleur client
le client comprend en outre un afficheur configuré pour afficher les données sous forme d'une ou plusieurs trames vidéo rendues, dans lequel les données comprennent les une ou plusieurs trames vidéo rendues et les données sont générées sur la base des informations client incluses dans le deuxième message.

6. Serveur (134) destiné à la transmission de données client, comprenant :
une mémoire ; et
un processeur couplé à la mémoire, le processeur et la mémoire étant configurés pour :
recevoir, à partir d'une pluralité de clients, une pluralité de messages, dans lequel au moins deux des messages comportent des informations associées à un ou plusieurs réseaux de communication sans fil, chaque message étant un message de protocole de description de session, SDP d'un protocole de lancement de session, SIP, dans lequel la pluralité de messages comprend un premier message (704a, 704b) comportant des informations comportant un identifiant de cellule d'une cellule de desserte de l'un des clients et dans lequel la pluralité de messages comprend en outre un deuxième message (706a, 706b) comprenant des informations client pour générer des données client (708) et un troisième message comportant un temps d'attente pour le traitement des données client (708) au niveau de chaque client ou un étalement de temps de liaison descendante de paquets arrivant au niveau de chaque client ; et
transmettre, à au moins un des clients, les données client (708), lors d'une ou plusieurs occasions de transmission sur la base des informations, les données client étant transmises à un temps échelonné déterminé sur la base du premier message (704a, 704b) comportant des informations comportant un identifiant de cellule d'une cellule de desserte d'un de la pluralité de clients et sur la base du temps d'attente ou de l'étalement de temps de liaison descendante de paquets arrivant au niveau du client.

7. Serveur selon la revendication 6, dans lequel le processeur et la mémoire sont configurés en outre pour :
obtenir des informations supplémentaires associées aux un ou plusieurs réseaux de communication sans fil et à des clients supplémentaires,
sélectionner un groupe de clients parmi les clients et les clients supplémentaires sur la base au moins en partie des informations et des informations supplémentaires, et
transmettre, au groupe de clients, les données client, dans lequel le processeur et la mémoire sont configurés en outre pour sélectionner le groupe de clients ayant un même identifiant de faisceau qu'une cellule de desserte.

8. Serveur selon la revendication 6, dans lequel le processeur et la mémoire sont configurés en outre pour sélectionner le groupe de clients ayant au moins un parmi :
un même identifiant de cellule d'une cellule de desserte,
un même identifiant de faisceau de la cellule de desserte,
des mêmes informations de quasi-coemplacement, QCL, associées à un signal de référence de la cellule de desserte,
une même adresse de commande d'accès au support, MAC, d'un point d'accès, ou
un même identifiant de réseau d'un réseau et/ou dans lequel le processeur et la mémoire sont configurés pour obtenir les informations supplémentaires à partir d'une base de données ou d'un autre serveur.

9. Serveur selon la revendication 6, dans lequel le processeur et la mémoire sont configurés en outre pour :
obtenir des informations supplémentaires associées aux un ou plusieurs réseaux de communication sans fil et à des clients supplémentaires,
sélectionner un groupe de clients parmi les clients et les clients supplémentaires sur la base au moins en partie des informations et des informations supplémentaires, et
transmettre à un autre serveur un ordonnancement indiquant les une ou plusieurs occasions de transmission pour le groupe de clients, dans lequel le serveur et l'autre serveur sont synchronisés dans le temps entre eux et de préférence dans lequel l'ordonnancement est déterminé sur la base de temps d'établissement de session du groupe de clients ou de latences aller-retour du groupe de clients.

10. Serveur selon la revendication 6, dans lequel le processeur et la mémoire sont configurés en outre pour : lancer la génération des données client lors d'une ou plusieurs occasions de traitement dont la synchronisation dépend au moins en partie des informations et/ou dans lequel le processeur et la mémoire sont configurés en outre pour lancer la transmission des données client lors des une ou plusieurs occasions de transmission dont la synchronisation dépend au moins en partie des informations et/ou dans lequel les informations comportent au moins des informations parmi :
un ou plusieurs identifiants de cellule de cellules de desserte des clients ;
un ou plusieurs identifiants de faisceau des cellules de desserte ;
des informations de quasi-colocation, QCL, associées à un ou plusieurs signaux de référence des cellules de desserte ;
une ou plusieurs adresses de commande d'accès au support, MAC, de points d'accès desservant les clients ; ou
un ou plusieurs identifiants de réseau de réseaux desservant les clients.

11. Serveur selon la revendication 6, dans lequel le processeur et la mémoire sont configurés en outre pour :
recevoir, à partir d'un des clients, des informations mises à jour indiquant un identifiant de cellule d'une cellule de desserte, et
lancer la génération des données client lors d'une ou plusieurs occasions de traitement dont la synchronisation est basée au moins en partie sur l'identifiant de cellule et/ou dans lequel le processeur et la mémoire son configurés en outre pour :
recevoir, à partir des clients, une pluralité de messages supplémentaires comportant des temps d'attente pour le traitement des données au niveau des clients ou des étalements de temps de liaison descendante de paquets arrivant au niveau des clients et convoyant les données, et
lancer la génération ou la transmission de données client supplémentaires lors d'une ou plusieurs occasions de traitement ou lors d'une ou plusieurs occasions de transmission dont la synchronisation est basée au moins en partie sur les temps d'attente ou étalements de temps de liaison descendante et/ou dans lequel le processeur et la mémoire sont configurés en outre pour :
recevoir, à partir des clients, une pluralité de messages supplémentaires comportant des informations client, et
rendre, au moyen du serveur en réponse aux messages supplémentaires, une ou plusieurs trames vidéo pour au moins un des clients sur la base des informations et des informations client, dans lequel les données clients comportent les une ou plusieurs trames vidéo rendues.

12. Procédé (500) de communication, depuis un client vers un serveur, d'informations associées à un réseau de communication sans fil, comprenant :
l'obtention (502), par un client à partir d'un modem, d'informations associées à un réseau de communication sans fil dans lequel les informations comportent un identifiant de cellule d'une cellule de desserte du client ;
la transmission (504), du client au serveur, à un niveau application, d'un premier message (704a, 704b) comportant les informations dans lequel le premier message est un message de protocole de description de session, SDP d'un protocole de lancement de session, SIP ;
la transmission, au serveur, à un niveau application, d'un deuxième message (706a, 706b) comprenant des informations client pour générer des données (708) ;
la transmission, au serveur (134), d'un troisième message comportant un temps d'attente pour le traitement des données (708) au niveau du client ou un étalement de temps de liaison descendante de paquets arrivant au niveau du client ; et
la réception, par le client à partir du serveur, de données client sur la base du deuxième message, dans lequel les données client sont reçues à un temps échelonné déterminé par le serveur sur la base des informations associées à un réseau de communication sans fil et sur la base du temps d'attente ou de l'étalement de temps de liaison descendante de paquets arrivant au niveau du client.

13. Procédé selon la revendication 12, dans lequel les informations comportent en outre au moins des informations parmi :
un identifiant de faisceau de la cellule de desserte ;
des informations de quasi-coemplacement, QCL, associées à un signal de référence de la cellule de desserte ;
une adresse de commande d'accès au support, MAC, d'un point d'accès desservant le client ; ou
un identifiant réseau d'un réseau desservant le client et/ou comprenant en outre:
le transfert, par le client, d'une cellule de desserte à une cellule cible, et
sur la base du transfert, la transmission, par le client au serveur, d'informations mises à jour indiquant un identifiant de cellule de la cellule cible

14. Procédé (600) de transmission de données clients, comprenant :
la réception (602), à partir d'une pluralité de clients par un serveur, d'une pluralité de messages, dans lequel deux des messages comportent des informations associées à un ou plusieurs réseaux de communication sans fil, chaque message étant un message de protocole de description de session, SDP de protocole de lancement de session, SIP, dans lequel la pluralité de messages comprend un premier message (704a, 704b) comportant des informations comportant un identifiant de cellule d'une cellule de desserte d'un de la pluralité de clients et dans lequel la pluralité de messages comprend en outre un deuxième message (706a, 706b) comprenant des informations client pour générer des données client (708) et un troisième message comportant un temps d'attente pour le traitement des données client (708) au niveau de chaque client ou un étalement de temps de liaison descendante de paquets arrivant au niveau de chaque client ; et
la transmission (608), du serveur à au moins un des clients, des données client (708), lors d'une ou plusieurs occasions de transmission sur la base des informations dans lequel les données client sont transmises à un temps échelonné déterminé sur la base du premier message (704a, 704b) comportant des informations comportant un identifiant de cellule d'une cellule de desserte d'un de la pluralité de clients et en fonction du temps d'attente ou de l'étalement de temps de liaison descendante de paquets arrivant au niveau du client.

15. Procédé selon la revendication 14, comprenant en outre :
l'obtention d'informations supplémentaires associées aux un ou plusieurs réseaux de communication sans fil et clients supplémentaires ;
la sélection d'un groupe de clients parmi les clients et les clients supplémentaires sur la base au moins en partie des informations et des informations supplémentaires ;
dans lequel la transmission des données client comprend la transmission, par le serveur au groupe de clients, des données client.

16. Procédé selon la revendication 14, comprenant en outre :
l'obtention d'informations supplémentaires associées aux un ou plusieurs réseaux de communication sans fil et clients supplémentaires ;
la sélection d'un groupe de clients parmi les clients et les clients supplémentaires sur la base au moins en partie des informations et des informations supplémentaires ; et
la transmission, à un autre serveur, d'un ordonnancement indiquant les une ou plusieurs occasions de transmission pour le groupe de clients, dans lequel le serveur et l'autre serveur sont synchronisés dans le temps entre eux et/ou comprenant en outre le lancement de la génération des données client lors d'une ou plusieurs occasions de traitement dont la synchronisation est basée au moins en partie sur les informations.

17. Procédé selon la revendication 14, dans laquelle les informations comportent au moins des informations parmi :
un ou plusieurs identifiants de faisceau des cellules de desserte ;
des informations de quasi-coemplacement, QCL, associées à un ou plusieurs signaux de référence des cellules de desserte ;
une ou plusieurs adresses de commande d'accès au support, MAC, de points d'accès desservant les clients ; ou
un ou plusieurs identifiants de réseau de réseaux desservant les clients et/ou comprenant en outre :
la réception, à partir d'un des clients par le serveur, d'informations mises à jour indiquant un identifiant de cellule d'une cellule de desserte ; et
le lancement de la génération des données clients lors d'une ou plusieurs occasions de traitement dont la synchronisation dépend au moins en partie de l'identifiant de cellule.

18. Procédé selon la revendication 14, comprenant en outre :
la réception, à partir des clients par le serveur, d'une pluralité de messages supplémentaires comportant des temps d'attente pour le traitement des données au niveau des clients ou des étalements de temps de liaison descendante de paquets arrivant au niveau des clients et convoyant les données ; et
le lancement de la génération ou de la transmission de données client supplémentaires lors d'une ou plusieurs occasions de traitement ou lors une ou plusieurs occasions de transmission dont la synchronisation est basée au moins en partie sur les temps d'attente ou les étalements de temps de liaison descendante et/ou comprenant en outre :
la réception, à partir des clients par le serveur, d'une pluralité de messages supplémentaires comportant des informations clients ; et
en réponse aux messages supplémentaires, le rendu, par le serveur, d'une ou plusieurs trames vidéo pour au moins un des clients sur la base des informations et des informations clients, dans lequel les données clients comportent les une ou plusieurs trames vidéo rendues.
